Europäisches Patentamt

European Patent Office

Office européen des brevets

(11) Veröffentlichungsnummer: **0 223 940**
**A1**

## (12) EUROPÄISCHE PATENTANMELDUNG

(21) Anmeldenummer: **86112211.7**

(22) Anmeldetag: **23.12.82**

(51) Int. Cl.⁴: **G 11 B 23/023**

(30) Priorität: **20.01.82 DE 3201486**

(43) Veröffentlichungstag der Anmeldung:
**03.06.87** Patentblatt **87/23**

(84) Benannte Vertragsstaaten:
**AT BE CH DE FR GB IT LI LU NL SE**

(60) Veröffentlichungsnummer der früheren
Anmeldung nach Art. 76 EPÜ: **0 086 275**

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) Behälter zur Aufbewahrung von Magnetbandkassetten oder anderen Aufzeichnungsträgern.

(57) Ein Behälter für Video-Magnetbandkassetten, Compactschallplatten oder ähnliche Aufzeichnungsträger mit einem Gehäuse (30) und einem Schieber (40), der von einer Vorspannfeder (98) nach Lösen einer Sperre in eine Öffnungsposition verschieblich ist. Der Schieber (140) trägt eine das Gehäuse verschließende Frontplatte (92), die beim Öffnen ausweicht, so daß die Kassette oder dergl. bequem erfaßbar ist. Ein gemeinsames Gehäuse enthält vorzugsweise mehrere Schieber. Ein Sperrschloß kann vorgesehen sein. Äußerlich gleiche Gehäuse können entweder an Kassetten oder an Compactschallplatten oder an noch andere Aufzeichnungsträger angepaßte Schieber enthalten.

EP 0 223 940 A1

**Fig.1**

**Fig.2**

49/77-E/A1

## Behälter zur Aufbewahrung von Magnetbandkassetten oder anderen Aufzeichnungsträgern

Die Erfindung betrifft einen Behälter zum Aufbewahren von Aufzeichnungsträgern in Kassetten- oder Plattenform mit den im Oberbegriff der Patentansprüche genannten Merkmalen. Solche Behälter sind in vielfältiger Form bekannt; so offenbart die DE-C-22 48 408 einen Behälter für Kompaktkassetten, bei dem die Frontwand einstückig mit dem Schieber ausgebildet ist, während bei dem Behälter gemäß DE-A-27 29 492 ein Deckel an das Gehäuse angelenkt ist, der beim Aufklappen einen Kassetten aufnehmenden Einsatz ein Stück aus dem Gehäuse herauszieht.

Aufgabe der Erfindung ist es, einen gattungsgleichen Behälter zu schaffen, der besonders für großflächige Aufzeichnungsträger, wie Videokassetten oder Kompaktschallplatten geeignet ist, welche nicht so leicht manipulierbar sind.

Ein wesentliches, zur Lösung dieser Aufgabe gemäß der Erfindung beitragendes Merkmal liegt darin, daß die Frontplatte mit dem Transportorgan beweglich verbunden ist und gegenüber ihrer Position, in der sie die Gehäuseöffnung verschließt, um einen solchen Winkel verlagerbar ist, daß das Aufbewahrungsgut in der Entnahmeposition an seinen Breitseiten erfaßbar ist.

Dies ermöglicht, den vom Transportorgan zurückzulegenden Weg klein relativ zu den Abmessungen des betreffenden Aufzeichnungsträgers zu machen, ohne daß Probleme bei der Entnahme und insbesondere beim Wiedereinlegen entstehen.

Ein spezieller Aspekt dieses Konzepts bildet den Gegenstand der prioritätsgleichen Europäischen Patentanmeldung mit der Veröffentlichungsnummer 86 275.

Andere Aspekte dieses Grundkonzepts bilden den Gegenstand der vorliegenden Anmeldung und sind in den Patentansprüchen definiert.

Es kann vorgesehen sein, daß die Frontplatte am Schieber angelenkt ist.

Es kann vorgesehen sein, daß die Frontplatte um eine zur längeren Seite der Gehäuseöffnung parallele Achse schwenkbar ist.

Es kann vorgesehen sein, daß die Achse im verriegelten Zustand des Schiebers von der Gehäuseöffnung aus in das Gehäuseinnere versetzt angeordnet ist.

Es kann vorgesehen sein, daß die Achse gegenüber der Symmetrieebene des Gehäuses seitlich versetzt angeordnet ist.

Es kann vorgesehen sein, daß die Achse in der Symmetrieebene des Gehäuses angeordnet ist.

Es kann vorgesehen sein, daß mindestens ein Zapfengelenk vorgesehen ist.

Es kann vorgesehen sein, daß eine scharnierbandartige Anlenkung vorgesehen ist.

0223940

Es kann vorgesehen sein, daß der Schieber im Bereich des Gelenks parallel zu den schmalen Gehäusewänden, die von der Gehäuseöffnung ausgehen, Plattenteile aufweist.

Es kann vorgesehen sein, daß der Schieber parallel zu beiden schmalen Gehäusewänden Plattenteile mit je einem Gelenk aufweist.

Es kann vorgesehen sein, daß der Schieber rahmenförmig ist derart, daß die Plattenteile sich im wesentlichen über die Tiefe des Gehäuses erstrecken und nahe der der Gehäuseöffnung gegenüberliegenden Gehäuserückwand durch eine Querplatte verbunden sind.

Es kann vorgesehen sein, daß der Schieber einen parallel zu einer Gehäuseschmalseite geführten Längsschenkel aufweist und an diesen am der Gehäuseöffnung abgewandten Ende L-förmig ein Querschenkel anschließt.

Es kann vorgesehen sein, daß die Frontplatte einseitig an dem Längsschenkel angelenkt ist.

Es kann vorgesehen sein, daß der Längsschenkel mittels einer parallel zur Gehäusebreitseite verlaufenden Platte mit einem weiteren Plattenteil, parallel zur anderen Gehäuseschmalseite, verbunden ist, an dem ein zweites Gelenk angeordnet ist.

Es kann vorgesehen sein, daß der Schieber eine an einer Gehäusebreitseite geführte Bodenplatte aufweist.

Es kann vorgesehen sein, daß das Gelenk in der Ebene der Schieberbodenplatte ausgebildet ist.

Es kann vorgesehen sein, daß die Plattenteile mit der Bodenplatte einstückig ausgebildet sind.

Es kann vorgesehen sein, daß die Frontplatte an einer Kante des Schiebers, die in dessen verriegeltem Zustand in etwa bündig mit der Gehäuseöffnung ist, angelenkt ist.

Es kann vorgesehen sein, daß an die Frontplatte abgewinkelte Plattenteile anschließen, die an den Schieber angelenkt sind.

Es kann vorgesehen sein, daß die Frontplatte mit einem Plattenteil eine etwa L-förmige Baugruppe bildet.

Es kann vorgesehen sein, daß die Frontplatte mit zwei Platten-teilen eine etwa U-förmige Baugruppe bildet.

Es kann vorgesehen sein, daß die Frontplatte ein abgewinkeltes Bodenstück aufweist, das bei verriegeltem Schieber etwa in Ausfluch-tung mit dessen Bodenplatte liegt.

Es kann vorgesehen sein, daß eine formschlüssige Verriegelung zwischen dem Gehäuse einerseits, den aus Schieber und Frontplatten-baugruppe beweglichen Teilen andererseits vorgesehen ist.

Es kann vorgesehen sein, daß das Gehäuse ein erstes und die Frontplattenbaugruppe ein zweites, mit dem ersten zusammenwirkendes Verriegelungsorgan aufweist.

Es kann vorgesehen sein, daß die Frontplatte als Entriegelungs-organ ausgebildet ist.

Es kann vorgesehen sein, daß die Verriegelung durch Bewegung der Frontplatte in zu ihrer Freigabebewegung entgegengesetzter Rich-tung entriegelbar ist.

Es kann vorgesehen sein, daß eines der Verriegelungsorgane ein Haken und das andere eine Öffnung ist, in die der Haken einfallen kann.

Es kann vorgesehen sein, daß der Schieber einerseits, das Gehäuse andererseits je ein Verriegelungsorgan aufweisen und neben der Frontplatte in der Gehäuseöffnung ein Entriegelungsorgan vor-gesehen ist.

Es kann vorgesehen sein, daß das Entriegelungsorgan eine Ver-längerung des Schiebers ist.

Es kann vorgesehen sein, daß der Schieber einerseits, das Gehäuse andererseits je ein Verriegelungsorgan aufweisen, gebildet von einer Kulisse und einem elastischen Kulissenstein.

Es kann vorgesehen sein, daß der Kulissenstein an das Gehäuse und die Kulisse an den Schieber angeformt ist.

Es kann vorgesehen sein, daß die Frontplatte durch eine Feder in ihre Kassettenfreigabeposition vorgespannt ist.

Es kann vorgesehen sein, daß eine zwischen Schieber und Frontplatte wirkende Feder vorgesehen ist.

- 5 -

Es kann vorgesehen sein, daß die Vorspannfeder eine in mindestens einem Gelenk angeordnete Schenkelhalsfeder ist.

Es kann vorgesehen sein, daß die Vorspannfeder der Auswerffeder über Führungselemente auf die Frontplatte übertragen ist.

Dabei kann man eine Führung in Form eines in einer Nut geführten Zapfens vorsehen.

Es kann vorgesehen sein, daß die Freigabebewegung der Frontplatte durch Anschläge begrenzt ist.

Es kann vorgesehen sein, daß die Frontplatte beim Einschieben des Schiebers in das Gehäuse selbsttätig in ihre Schließposition geführt wird.

Es kann vorgesehen sein, daß die Frontplatte beim Bewegen des Schiebers selbsttätig in ihre Freigabestellung geführt ist.

Es kann vorgesehen sein, daß für das Bewegen der Frontplatte eine Kulissenführung im Gehäuse vorgesehen ist, in die ein an der Frontplattenbaugruppe vorgesehener Kulissenstein greift.

Es kann vorgesehen sein, daß an der Frontwand eine vorkragende Betätigungstaste angebracht ist.

Es kann vorgesehen sein, daß die Frontwand als Etikettenträger ausgebildet ist.

Es kann vorgesehen sein, daß die Frontwand ein ein Etikett abdeckendes transparentes Fenster aufweist.

Es kann vorgesehen sein, daß die Frontwand aus transparentem Material besteht.

Es kann vorgesehen sein, daß der Behälter an die größten Kassetten angepaßte Innenmaße aufweist und daß Ausgleichselemente zum Abstützen von Kassetten kleinerer Abmessungen vorgesehen sind.

Dabei kann man am Schieber anbringbare Adapter vorsehen.

Dabei kann man eine im Gehäuse angebrachte Blattfeder mit einem abgewinkelten Anschlag, der beim Einschieben größerer Kassetten durch Auslenken der Blattfeder wegschwenkbar ist, vorsehen.

Dabei kann man ein auf eine eingelegte Kassette wirkendes Bremselement vorsehen.

Es kann vorgesehen sein, daß die Blattfeder zugleich als Bremselement ausgebildet ist.

Es kann vorgesehen sein, daß für jeden Schieber ein eigenes Gehäuse vorgesehen ist, das mit mindestens einem weiteren gleichartigen Gehäuse formschlüssig verbindbar ist.

Es kann vorgesehen sein, daß die an die Frontöffnung des Gehäuses anschließenden Gehäusewände mit Verbindungselementen versehen sind.

Es kann vorgesehen sein, daß für mehrere Kassetten ein gemeinsames Gehäuse vorgesehen ist, das für jede Kassette einen Schieber aufweist.

Es kann vorgesehen sein, daß das Gehäuse aus einem Außenrahmen und eingelegten Zwischenböden besteht.

Es kann vorgesehen sein, daß das Gehäuse Führungsrippen für den Schieberlängsschenkel und Distanzrippen für die Kassetten an der dem Längsschenkel gegenüberliegenden Gehäusewandung aufweist.

Es kann vorgesehen sein, daß das Gehäuse ein Kunststoffspritzgußteil umfaßt.

Es kann vorgesehen sein, daß der Schieber ein Kunststoffspritzgußteil umfaßt.

Es kann vorgesehen sein, daß die Frontplatte ein Kunststoffspritzgußteil umfaßt.

Es kann vorgesehen sein, daß der Schieber und die Frontplatte ein einstückiges Kunststoffspritzgußteil mit einem angespritzten Gelenk bilden.

Es kann vorgesehen sein, daß die Plattenteile gegenüber dem Schieber elastisch nach außen biegbar sind, um die Frontplattenbaugruppe am Schieber zu montieren.

Es kann vorgesehen sein, daß an den Plattenteilen des Schiebers einerseits, der Frontplattenbaugruppe andererseits ineinanderschnappbare Lagerhülsen bzw. Lagerpfannen ausgebildet sind.

Es kann vorgesehen sein, daß im Inneren der Lagerhülse der Korpus einer Schenkelhalsfeder untergebracht ist, deren Schenkel in Schlitze der Plattenteile greifen.

Es kann vorgesehen sein, daß das Gehäuse Führungsrippen für den Schieberlängsschenkel aufweist.

Es kann vorgesehen sein, daß das Gehäuse außerhalb des Führungsbereichs für die Längsschenkel Stützrippen für eingelegte Kassetten aufweist.

Es kann vorgesehen sein, daß der Schieber durch angesetzte Rippen an seiner Querplatte versteift ist, die auf der der Gehäuseöffnung abgewandten Rückseite derselben angeformt sind.

Es kann vorgesehen sein, daß das Bremselement ein im Gehäuseinneren befestigtes Schaumstoffteil ist.

Es kann vorgesehen sein, daß bei Ausbildung des Gehäuses zur Aufnahme mehrerer Kassetten die Frontplatten in ihrer Schließposition einander überlappend ausgebildet sind.

Es kann vorgesehen sein, daß das Gehäuse Führungsrippen in Wirkverbindung mit Führungskufen der Schieber aufweist.

Es kann vorgesehen sein, daß der Schieber rahmenförmig mit zu den Führungsrippen parallelen, die Führungskufen tragenden H-Profil-Streben ausgebildet ist, die zwischen deren einander zugewandte Kanäle jeweils eine Kassette paßt, mit einer Endwandung, an der die Auswerffeder angreift. und mit die H-Profil-Streben an deren der Endwandung abgewandten Seite miteinander verbindenden Zwischenstreben.

Es kann vorgesehen sein, daß die Querstege der H-Profile über die Zwischenstreben hinaus verlängert sind und je ein Lagerauge für Lagerarme der Frontplatte aufweisen.

Es kann vorgesehen sein, daß auf der dem Behälterinnern abgewandten Außenseite der Frontplatte übereinander eine Auslösetaste und ein Etikettenaufnahmefach angeordnet sind.

Es kann vorgesehen sein, daß die Auslösetaste über eine längs der Frontplatte geführte Schubstange mit einem Sperrhaken verbunden ist, der unter Federvorspannung in eine Gehäuseöffnung einrastbar ist.

Es kann vorgesehen sein, daß das Gehäuse frontseitig einen rahmenförmigen Gehäusekragen aufweist.

Es kann vorgesehen sein, daß der Gehäusekragen als getrenntes Bauteil aus Kunststoff gespritzt ist und mit dem Gehäuse in Schnappverbindung steht.

Es kann vorgesehen sein, daß in mindestens eine Taste aller in dem Gehäuse untergebrachten Schieber ein Schloß eingebaut ist.

Es kann vorgesehen sein, daß in nur eine Schiebertaste aller im Gehäuse untergebrachten Schieber ein Schloß eingebaut ist, das über ein Sperrorgan in Wirkverbindung mit allen Schiebern steht.

Es kann vorgesehen sein, daß das Sperrorgan eine quer zu der Schieberbewegungsrichtung aus einer Freigabe- in eine Sperrposition mittels des Schlosses bewegliche Platte mit Sperrzinken umfaßt, die in der Sperrposition vor Gegenzinken an den Schiebern liegen und vorzugsweise in Freigabeposition federvorgespannt ist.

Es kann vorgesehen sein, daß das Schloß einen Sperrarm umfaßt, der in einer Sperrposition die Tastenverschiebung blockiert.

Es kann vorgesehen sein, daß großflächige Abschnitte des Schiebers gewichtsmindernde Durchbrechungen aufweisen.

Es kann vorgesehen sein, daß das Gehäuse auf seiner Oberseite formkomplementär zu seiner Unterseite ausgebildet ist, so daß mehrere gleichartige Behälter formschlüssig übereinanderstapelbar sind.

Es kann vorgesehen sein, daß eine hochstehende Gehäusekragenkante komplementär zu einer Gegenkante eines Gehäusefußes ausgebildet ist.

Es kann vorgesehen sein, daß der Gehäusefuß als Führung für eine Schublade ausgebildet ist.

Es kann vorgesehen sein, daß die Frontplatte mit dem Schieber gelenkig derart verbunden ist, daß sie um eine sich in Richtung der kürzesten Abmessung des Aufbewahrungsguts erstreckende Achse schwenkbar ist.

Es kann dabei vorgesehen sein, daß zusätzlich zu der schwenkbeweglichen Verbindung zwischen Frontplatte und Schieber auch noch eine translatorische Verschieblichkeit zwischen beiden vorgesehen ist.

Es kann vorgesehen sein, daß die Frontplatte um eine zur Translationsrichtung des Schiebers parallele nahe einer Gehäusewandung verlaufende Achse schwenkbar mit dem Schieber verbunden ist.

Es kann ferner vorgesehen sein, daß der Schieber einen Unterschieber aufweist zur Anpassung des Aufnahmeraums innerhalb des Behälters an unterschiedliche Formate des aufzubewahrenden Guts.

Es kann ferner vorgesehen sein, an den Gehäusen Formschlußelemente vorzusehen, mittels denen sie an einem gemeinsamen Tragorgan verankerbar sind, um eine Mediothek aufzubauen.

Für die Aufbewahrung von Kompatkschallplatten kann es vorgesehen sein, daß der Schieber Aufnahmeöffnungen für jeweils eine von mehreren in einem gemeinsamen Schieber untergebrachte Schallplatten aufweist. Dabei kann es zweckmäßig sein, daß die Aufnahmeöffnungen derart angeordnet sind, daß die Kompaktschallplatten unter Schwerkraftwirkung in den Aufnahmen gehalten sind. Dabei kann vorgesehen werden, daß die Schallplatten für die Entnahme einer einzelnen Platte in Richtung weg von der Gehäuseöffnung ausweichend untergebracht sind.

Es kann aber auch zweckmäßig sein, daß jeder einzelnen von mehreren in einem gemeinsamen Schieber untergebrachten Kompaktschallplatte ein eigener Halter zugeordnet ist, der gemeinsam mit dem Schieber aus dem Gehäuse translatorisch herausbewegbar ist, und daß diese einzelnen Halter zwecks besserem Zugriff auseinanderspreizbar sind.

Dabei kann es zweckmäßig sein, daß diese Aufspreizung oder Auffächerung bereits durch die Auswärtsbewegung des Schiebers zwangsgesteuert oder unter Federkraft erfolgt.

Ausführungsbeispiele des Gegenstandes der Erfindung werden nachstehend unter Bezugnahme auf die beigefügten Zeichnungen näher erläutert.

Fig. 1    stellt im schematisierten Längsschnitt einen ersten Behälter im geschlossenen Zustand dar,

Fig. 2    zeigt den Behälter in analoger Darstellung, jedoch geöffnet,

Fig. 3    ist eine Explosionsdarstellung des Behälters in perspektivischer Darstellung, wobei Teile weggebrochen sind,

- 10 -

0223940

Fig. 4   zeigt die Lage von zu montierenden Bauteilen unmittelbar vor der Montage, in schematischer Schnittdarstellung,

Fig. 5   entspricht der Fig. 4, zeigt jedoch eine Seitenansicht,

Fig. 6   zeigt in Rückansicht mehrere zu einem Block gestapelte Behälter,

Fig. 7   zeigt in Draufsicht einen Randbereich eines der gestapelten Behälter,

Fig. 8   zeigt in Ansicht von unten das zugehörige Einklinkelement des nächsten Behälters,

Fig. 9   stellt im Schnitt ein Detail der Einklinkelemente dar,

Fig. 10  zeigt ein Behältergehäuse gemäß der Erfindung, in dem
mehrere Kassetten untergebracht werden können, in Ansicht von vorn,

Fig. 11  ist eine vergrößerte Darstellung des in Fig. 10 mit
"11" markierten Bereichs,

Fig. 12  ist ein Teilschnitt gemäß Linie 12-12 in Fig. 10,

Fig. 13  ist eine Schnittdarstellung nach Linie 13-13 der

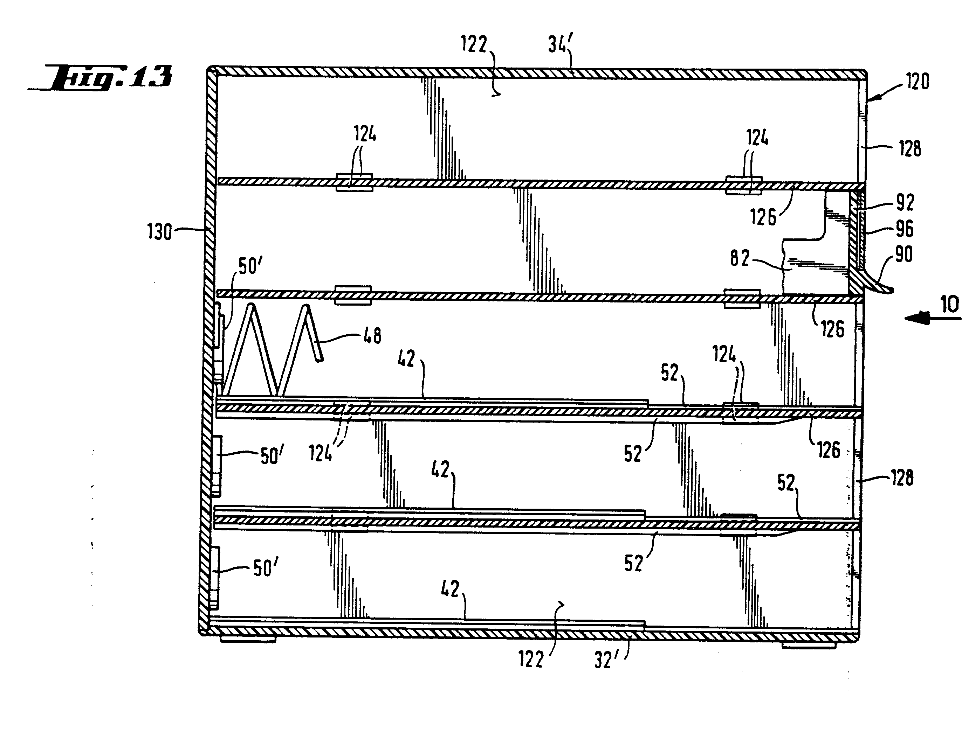

Fig. 10, wobei jedoch in dem mittleren Abteil die
Feder und im zweitobersten Abteil der Schieber weggelassen sind,

Fig. 14  ist ein Vertikalschnitt durch eine weitere Ausführungsform eines Behälters,

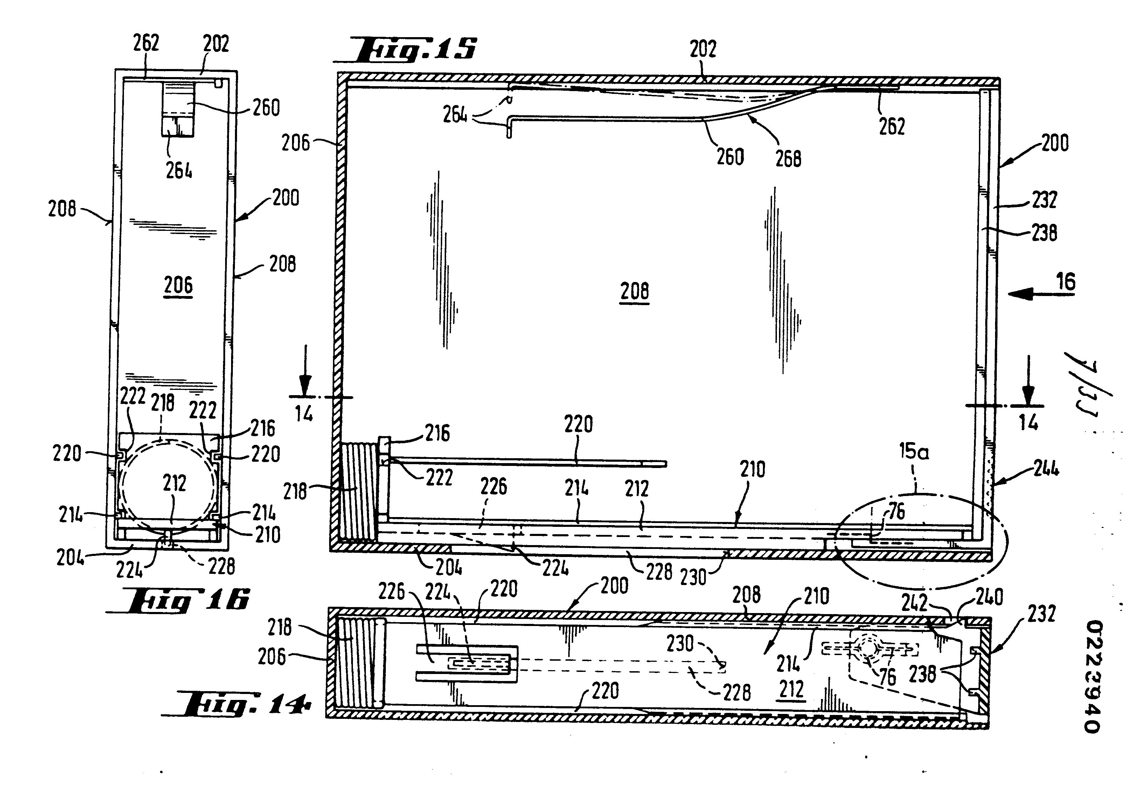

Fig. 15  ist der zugehörige Horizontalschnitt,

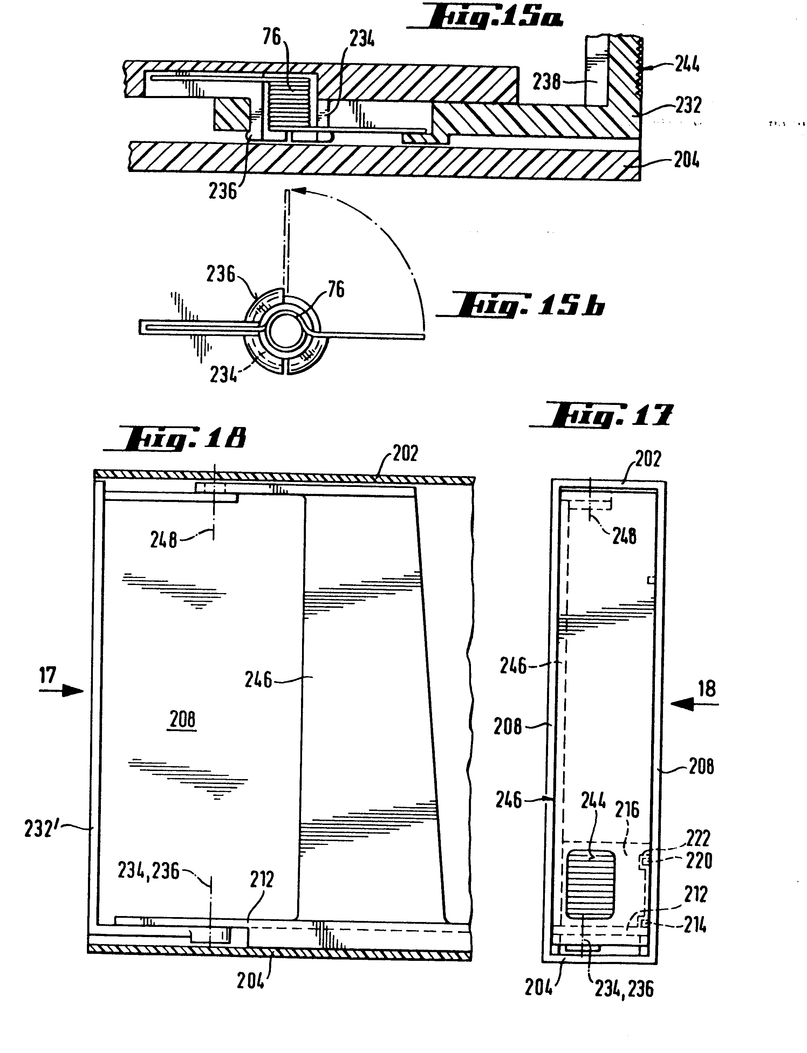

Fig. 16  ist die zugehörige Frontansicht, wobei der Deckel
weggelassen ist,

Fig. 17  zeigt eine Variante des Deckels von vorn,

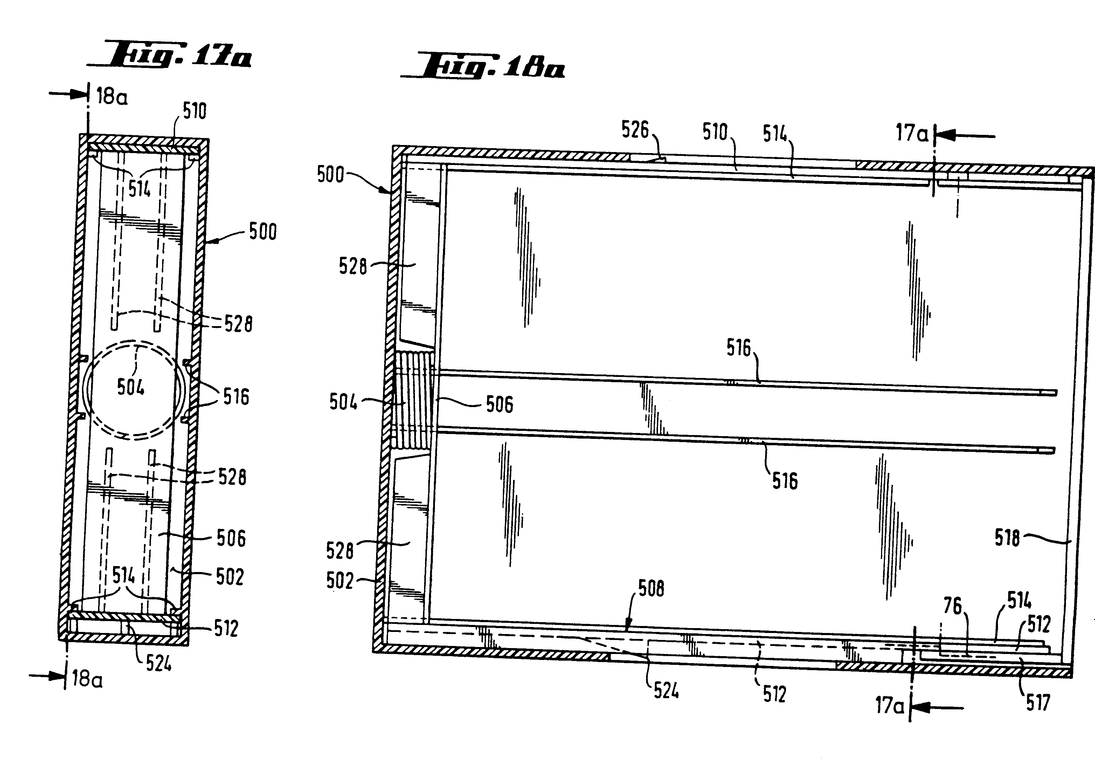

Fig. 18  ist die zugehörige Seitenansicht,

Fig. 17a bzw. 18a   zeigen eine weitere, Fig. 17/18 ähnliche
Form,

Fig. 19  ist eine Frontansicht eines Sammelblocks für mehrere
Kassetten, wobei drei Abteile mit Deckel, ein Abteil
mit Auswerffeder, ein Abteil mit Schieber und ein Abteil leer dargestellt sind,

Fig. 20  ist eine Teilschnittdarstellung durch mehrere Abteile im Frontbereich zur Darstellung der Deckelanordnung,

- 11 -                              0223940

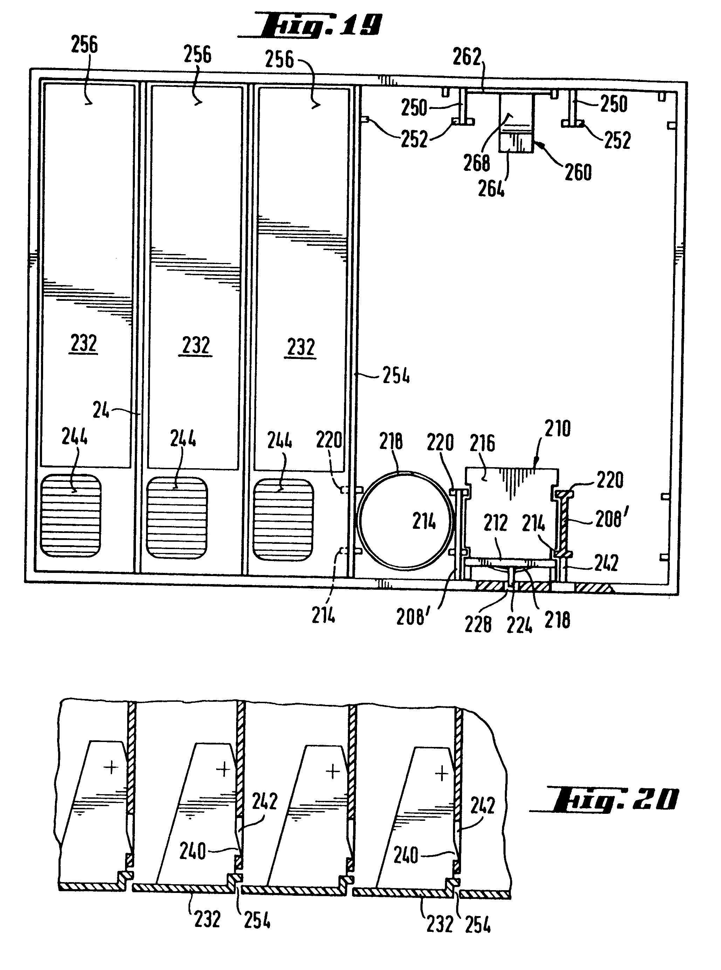

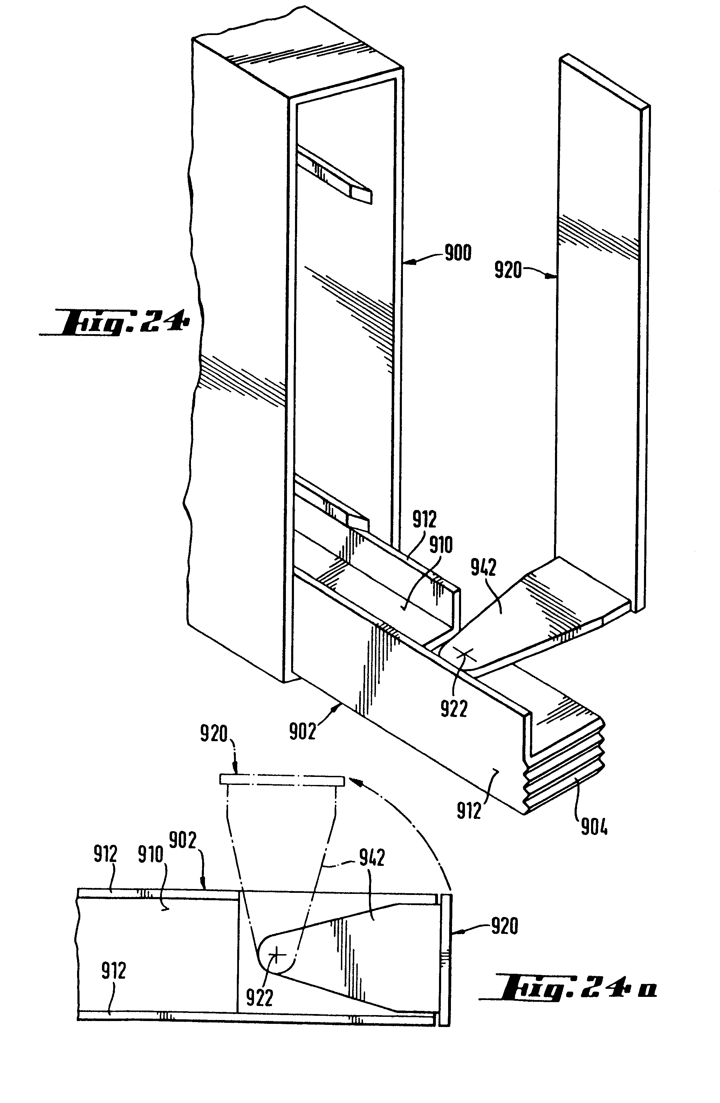

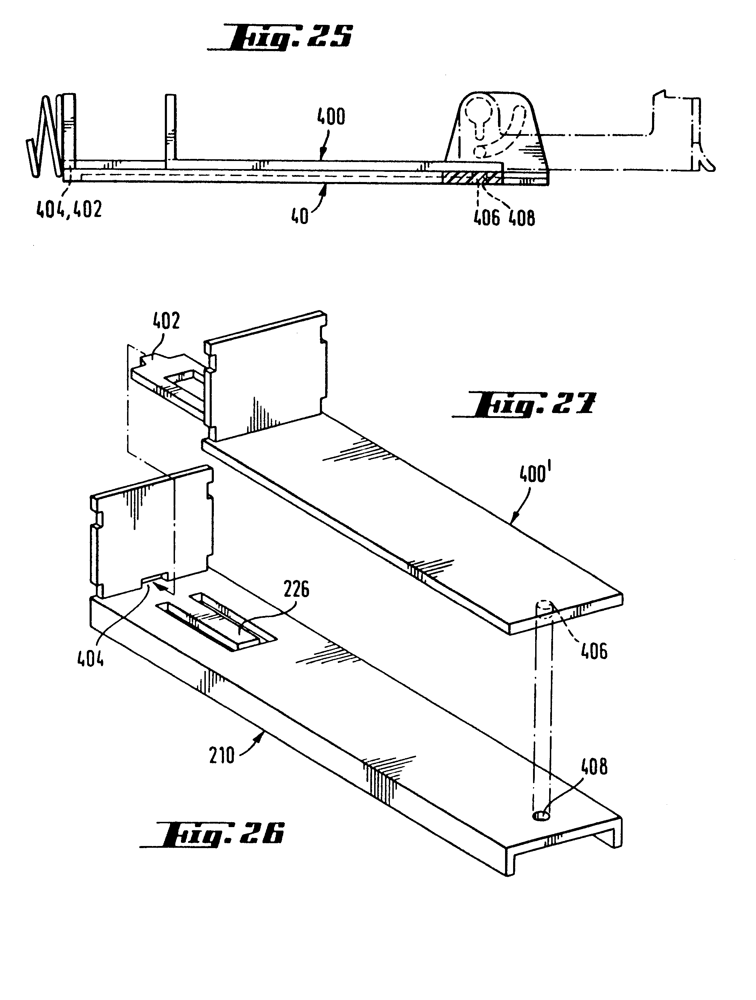

Fig. 21 bis 24    sind Schnitt- bzw. Teilschnittdarstellungen
                  einer weiteren Ausführungsform,
                        und 27
Fig. 25 bzw. 26   zeigen Einsatzteile für die erste bzw. zweite
                  Ausführungsform zur Anpassung an kleinere Außenabmessungen von Kassetten,

Fig. 28   stellt im Schnitt eine weitere Ausführungsform eines
          Behälters dar, wobei der hintere Teil weggebrochen
          ist,

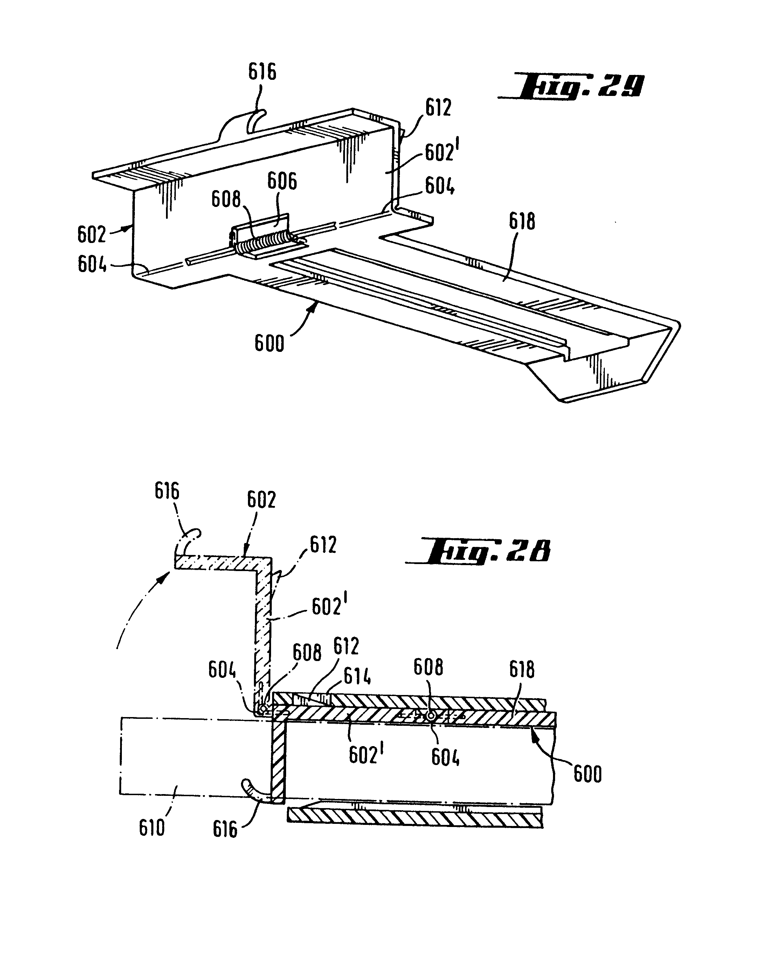

Fig. 29   zeigt perspektivisch von unten den Schieber für die
          Ausführungsform nach Fig. 28, und

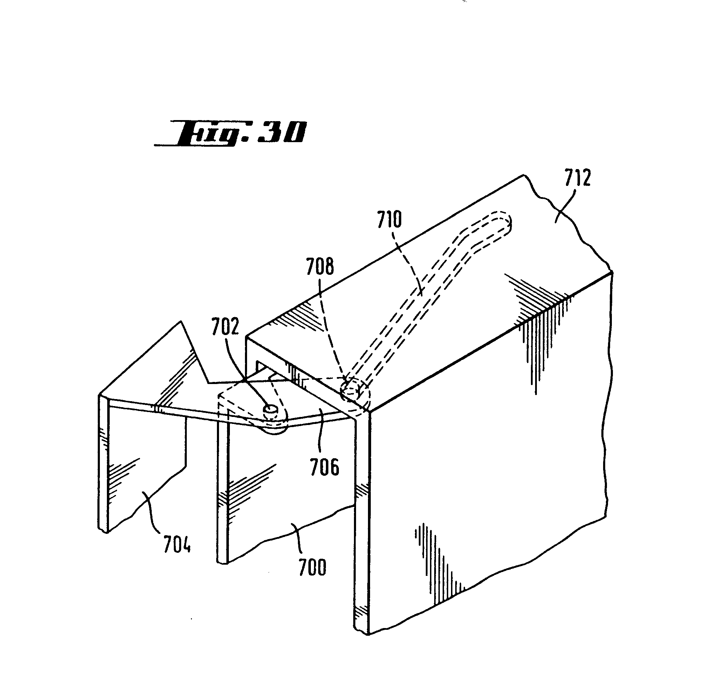

Fig. 30   stellt perspektivisch eine Zwangsführung für das
          Öffnen bzw. Schließen eines Behälterdeckels dar,

Fig. 31 bis 45    beziehen sich auf ein bevorzugtes Ausführungsbeispiel,

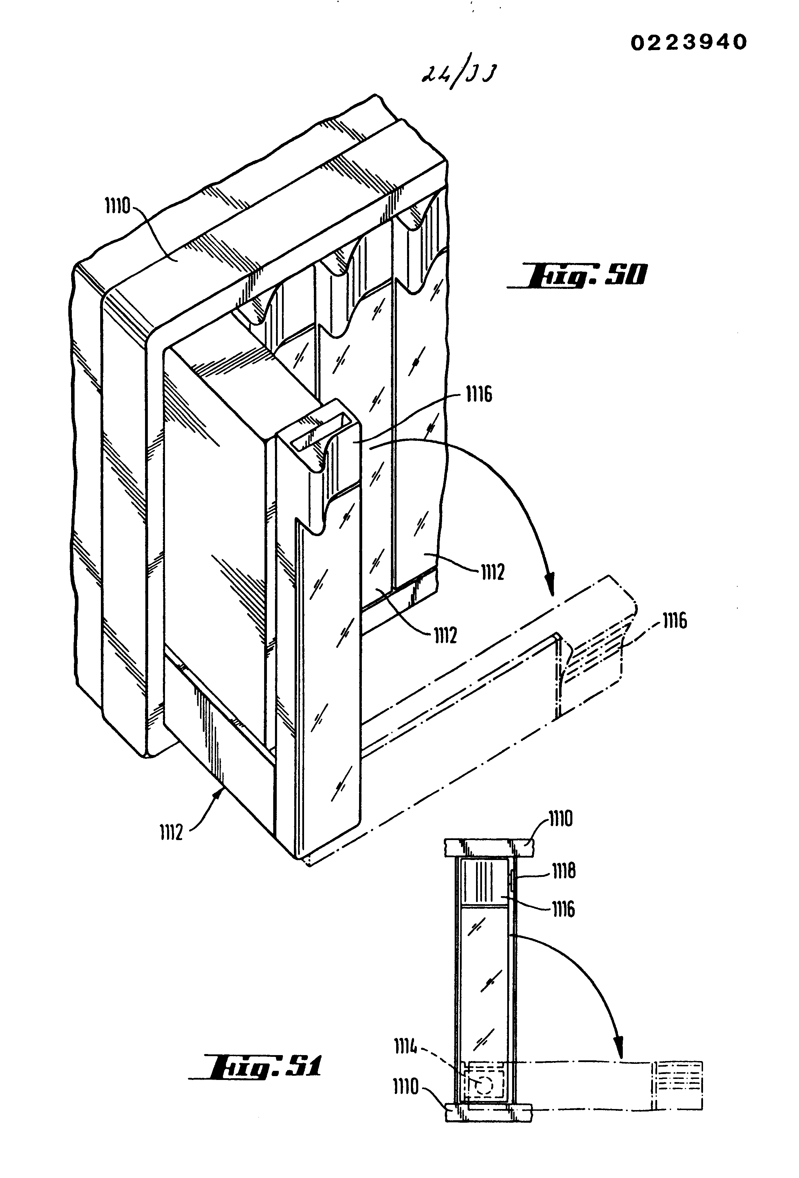

Fig. 46 bis 49    beziehen sich auf eine weitere Ausführungsform,

Fig. 50 und 51    zeigen eine weitere Ausführungsform,

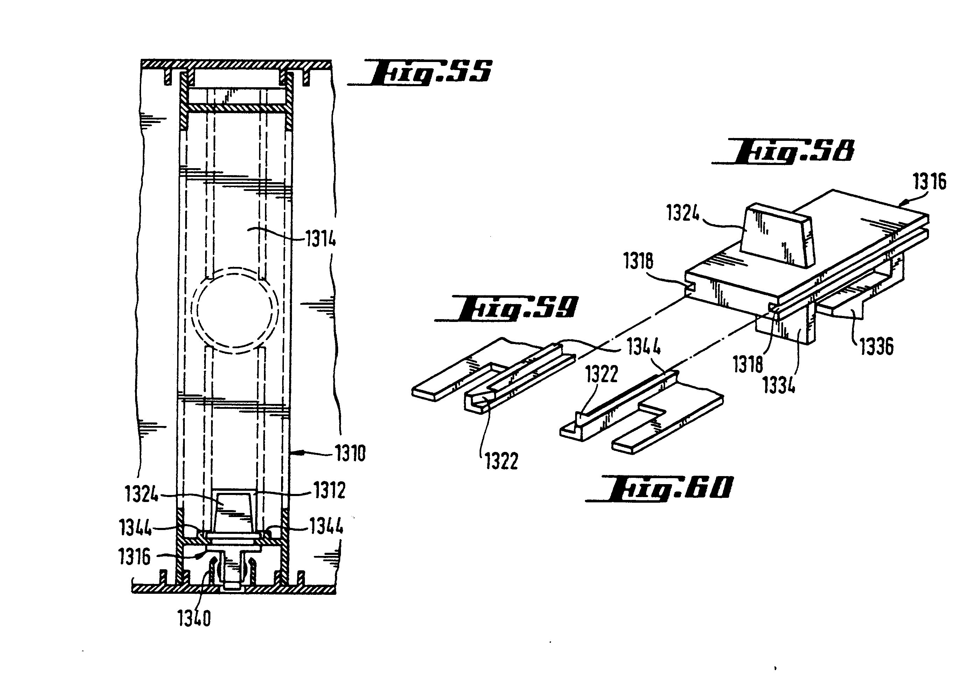

Fig. 52 bis 54    stellen eine weitere Ausführungsform dar,

Fig. 55 bis 60    zeigen eine andere Bauart eines Behälters
                  für die Anpassung an unterschiedlich große
                  Kassetten,

Fig. 61 bis 63    stellen schematisch eine Mediothek dar,

Fig. 64 bis 70    betreffen Behälter zur Aufnahme von scheiben-
                  förmigen Aufzeichnungsträgern, insbesondere soge-
                  nannter "compactdiscs", und

Fig. 71 bis 80    zeigen eine alternative Behälterbauart für
                  flache, scheibenförmige Aufzeichnungsträger, vor allem
                  für sogenannte Compactdiscs.

Zunächst werden Videokassettenbehälter behandelt.

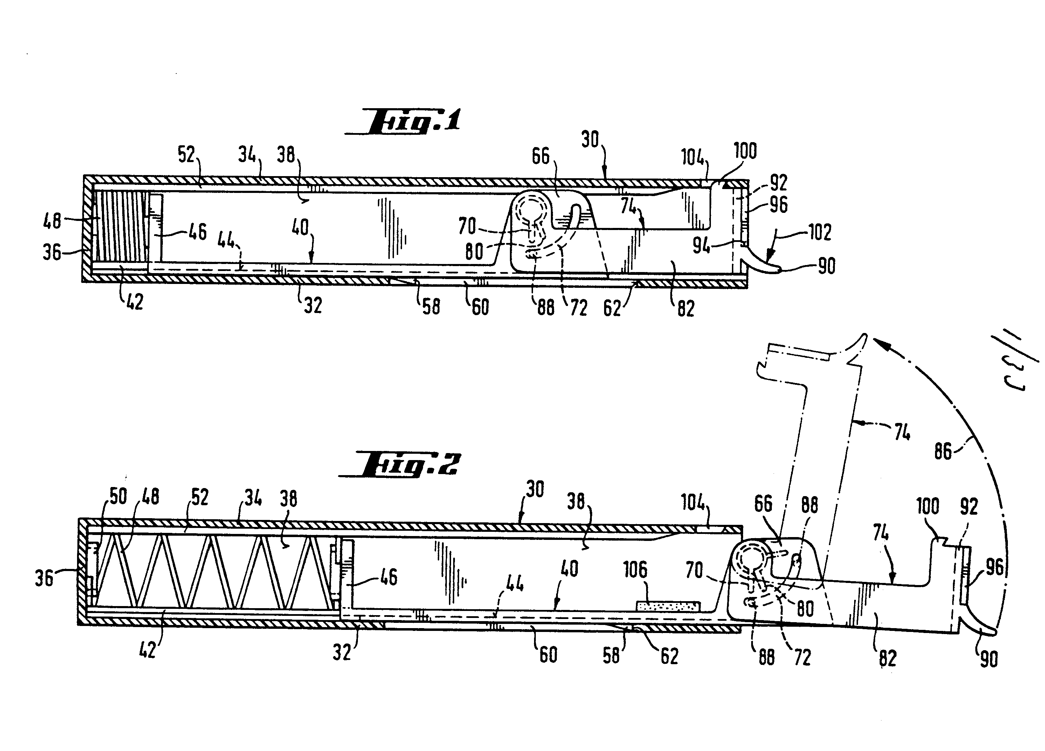

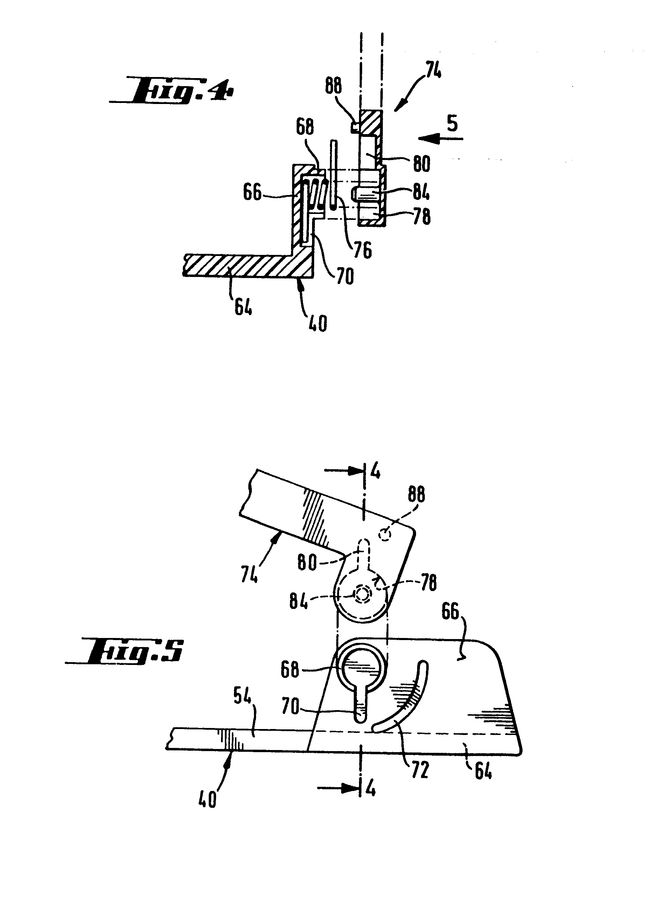

Die Fig. 1 bis 13 beziehen sich auf eine erste Bauform des
Behälters. Man erkennt in Fig. 1 ein im wesentlichen blockförmiges
Gehäuse 30 mit Boden 32, Deckwand 34, Rückwand 36 und Seitenwänden 38. Im Gehäuse ist ein Transportschieber 40 gleitbeweglich
aufgenommen. Man erkennt in Fig. 3, daß an den Gehäuseboden 32
Führungsstege 42 angeformt sind, längs denen an den Schieber anformte Führungsrippen 44 laufen. An der Gehäuserückwand 36 einerseits und an einer Rückplatte 46 des Schiebers andererseits stützt sich eine Auswerfefeder 48 ab, die hier als Schraubenfeder ausgeführt ist. Sie sitzt auf Nocken 50, angeformt an die Gehäuserückwand 36, und wird während des Schieberauswurfs gegen Ausknicken durch Stützschienen 52 gesichert, die an Deck- und Bodenwandung des Gehäuses angeformt sind. Auf den bodenseitigen Stützschienen ist auch der Frontbereich des Schiebers geführt, dessen Bodenplatte 54 zu diesem Zweck mit Einschnitten 56 versehen ist. Auf der Unterseite der Schieberbodenplatte 54 sind zwei nasenförmige Anschläge 58 vorgesehen, die in Schlitzen 60 des Gehäusebodens 32 laufen und die Auswerfbewegung des Schiebers beim Auflaufen auf die Schlitzendkante 62 begrenzen.

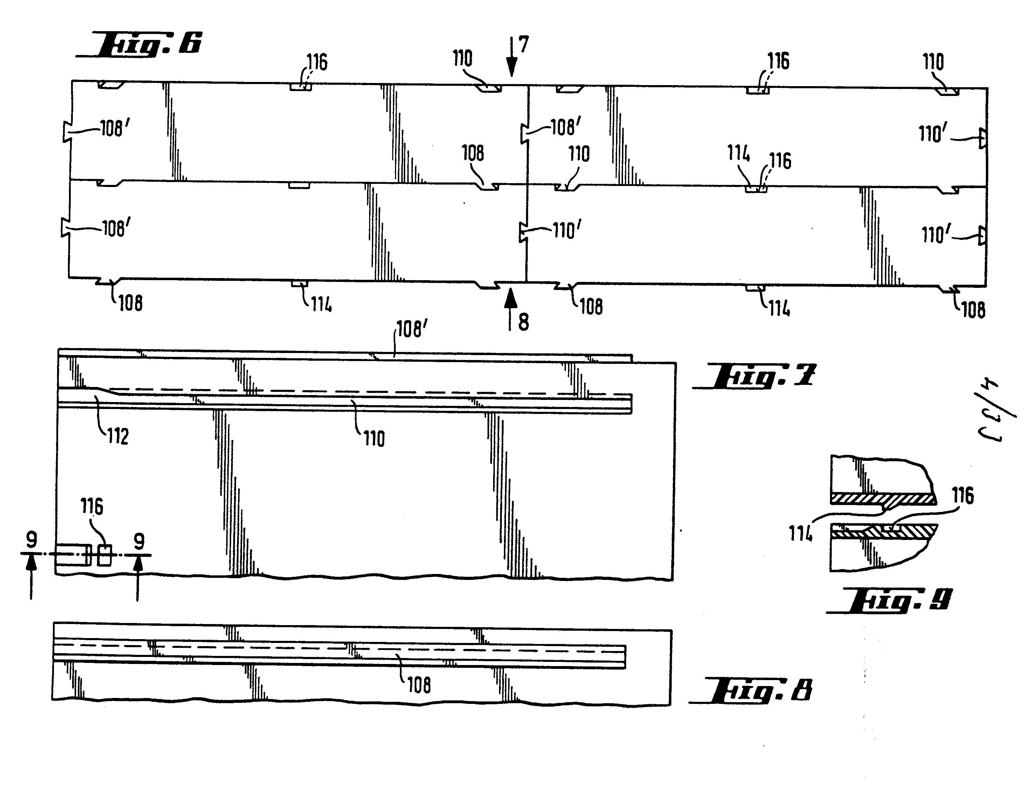

Die Schieberbodenplatte ist auf dem größten Teil ihrer Erstreckung in Auswerfrichtung schmaler als der Innenraum des Gehäuses, verbreitert sich jedoch nach der Gehäusefront hin um zwei Flügel 64, an deren Außenkanten sich Wangen 66 nach oben erstrecken. An die Wangen ist jeweils eine hohlzylindrische Hülse 68 angeformt, und in die Wange sind ein kurzer, gerader Schlitz 70 und ein kreisbogenförmiger Schlitz 72, zentriert auf die Achse der Hülse 68, eingebracht. Die Tiefe der Schlitze läßt sich in Fig. 4 entnehmen.

Die Außenwandung der Hülse 68 bildet den Lagerzapfen für den Deckel 74, während sie zugleich eine Schenkelhalsfeder 76 aufnimmt, deren einer Schenkel in den Schlitz 70 greift. Der Deckel besitzt zu den Hülsen 68 komplementäre Lagerpfannen 78 mit einem wegragenden weiteren Schlitz 80 zur Aufnahme des anderen Federschenkels.

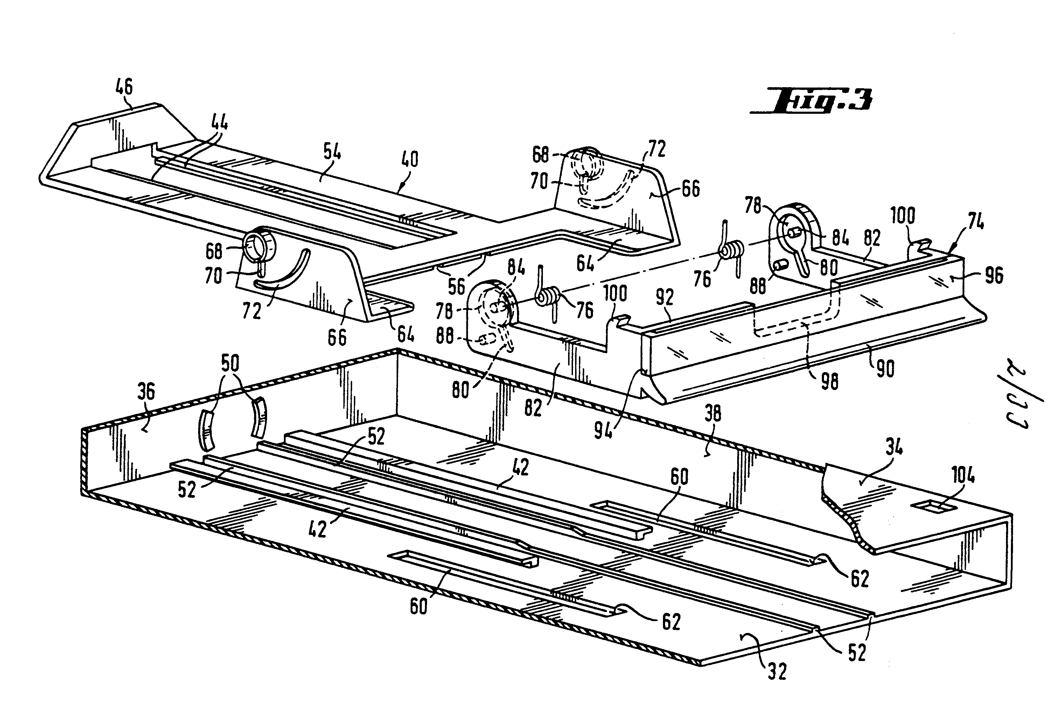

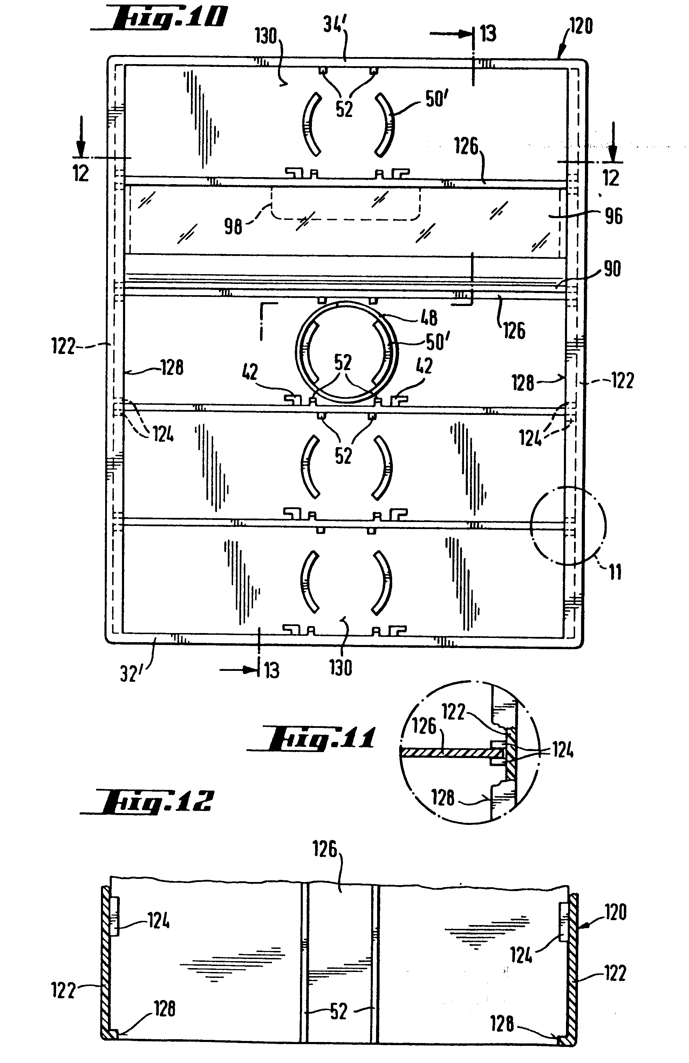

Bei der Montage werden die Arme 82 des im wesentlichen einen U-förmigen Grundriß aufweisenden Deckels auseinandergespreizt, so daß die Lagerpfannen 78 über die Hülsen 68 schnappen können. Dabei wird zugleich die Schenkelhalsfeder 76, vorher in die Hülse eingelegt, zentriert durch den Zapfen 84 im Zentrum der Lagerpfannen. Diese Position ist in Fig. 5 gezeigt. Schwenkt man nun den Deckel entgegen der Richtung des Pfeils 86 in Fig. 2, so schnappt der Anschlagstift 88 in den Schlitz 72, wobei zugleich die Schenkelhalsfeder die nötige Vorspannung erhält, das heißt in die in Fig. 2 strichpunktiert dargestellte Position des Deckels.

- 13 -

Der Basisteil des Deckels 74 umfaßt eine Griffleiste 90, die gegenüber einer Frontplatte 92 weiter nach vorn ragt, so daß sich eine Stufe 94 ergibt. Auf ihr stützt sich ein transparenter Schutzschild 96 für ein (nicht dargestelltes) Etikett während des Anschweißens oder Anklebens ab, und die Entnahme des Etiketts wird durch einen Ausschnitt 98 der Frontplatte 92 erleichtert.

Die Arme 82 des Deckels weisen Haken 100 auf, die beim Einschieben des Schiebers in das Gehäuse unter der Gehäusedeckwandung 34 entlanggleiten, bis der Schieber seine innere Endstellung erreicht hat. Dabei drückt der Benutzer die gesamte Schieberbaugruppe nach innen gegen die Vorspannung der Auswerffeder 48. Zum Entnehmen der Kassette wird auf die Griffleiste nach unten gedrückt, Pfeil 102 in Fig. 1, wobei die Haken 100 aus den Durchbrüchen 104 gehoben werden, die sich durch die Deckwand 34 des Gehäuses erstrecken und in die sie beim Schließen des Gehäuses unter der Wirkung der Schenkelhalsfeder 76 eingerastet hatten. Damit die Kassette nicht hinauskatapultiert wird, wenn der Benutzer die Griffleiste sofort nach dem Niederdrücken losläßt, ist ein Bremsklotz 106 aus Schaumstoff vorgesehen. Im übrigen bestehen das Gehäuse, der Schieber, der Deckel und der Schutzschild aus Kunststoff.

Fig. 6 zeigt ein Beispiel in Rückansicht, wie durch Anbringen von Stapelschienen 108 und Stapelnuten 110 auf Boden- bzw. Deckwand 36 bzw. 34 des Gehäuses mehrere solcher Behälter zu einem vertikalen Block gestapelt werden können. Auch seitlich können entsprechende Elemente 108' bzw. 110' vorgesehen sein. Diese Elemente ragen nicht bis ganz zur Frontseite (vgl. Fig. 8), und zwar aus ästhetischen Gründen. Das Zusammenschieben beim Stapeln wird durch die Erweiterung 112 der Nuten 110 erleichtert, und der Zusammenhalt wird durch die Verriegelungsnasen 114 sichergestellt, die in eine Vertiefung 116 elastisch einschnappen.

Man kann aber auch, wie aus Fig. 10 bis 13 hervorgeht, mehrere Schieber nach Fig. 1 - 5 in einem gemeinsamen Gehäuse unterbringen. Dieses besteht aus einem Außenrahmen 120, dessen Boden 32' und Deckwand 34' der Ausführungsform nach Fig. 1-3 entspricht. An die Seitenwände 122 des Rahmens 120 sind U-Halterungen 124 angeformt, in die jeweils eine Zwischenplatte 126 einlegbar ist. Die Zwischenplatten entsprechen auf ihrer Oberseite dem Boden, auf ihrer Unterseite der Deckwand aus Fig. 1-3. Der Außenrahmen ist an seiner Frontseite mit nach innen einspringenden Kanten 128 versehen, an denen die Zwischenplatten zur Anlage kommen, wenn auf die Rückseite des Rahmens 120 eine Endwand 130 aufgesetzt und befestigt wird, auf der dann auch die Federhaltenocken 50' ausgebildet sind.

Die beschriebenen Ausführungsformen haben den Vorteil, daß die Gleitführung für den Schieber in dessen mittleren Bereich vorgesehen sein kann, wodurch die Gefahr des Verklemmens infolge Schrägstellung (ungleichförmiger Druck auf den Griff beispielsweise) verringert wird. Allerdings sind dann auch am Gehäuse Gegenelemente der Führung im mittleren Bereich vorzusehen, was das einstückige Spritzen eines Blockgehäuses schwierig macht.

Die Ausführungsform nach Fig. 14 bis 20 weist diese Merkmale nicht auf, und sie läßt sich daher kostengünstig fertigen.

Fig. 14 bis 16 zeigen einen Einzelbehälter. Das Gehäuse 200 besitzt auch hier Deckwand 202, Boden 204, Rückwand 206 sowie Seitenwände 208. Im Gegensatz zur Darstellung nach Fig. 1-13 werden hier die Kassetten nicht auf ihrer Breitseite "liegend", sondern auf einer ihrer längeren Schmalseiten "stehend" aufbewahrt, so daß also hier die Seitenwände 208 die größte Abmessung besitzen.

In dem Gehäuse ist ein im Grundriß L-förmiger Schieber 210 gleitbeweglich geführt. Der in Richtung auf die Gehäuseöffnung ragende L-Schenkel 212 des Schiebers hat umgekehrt U-förmigen Querschnitt (vgl. Fig. 16), so daß er sich an den Seitenwänden 208 und am Boden 204 abstützen kann; ferner greifen seitliche an die Seitenwände 208 des Gehäuses angeformte Rippen 214 über diesen Schenkel. Am kürzeren Schieberschenkel 216 drückt die Auswerfefeder 218, abgestützt an der Gehäuserückwand 206 und gegen Ausknicken gesichert durch weitere Rippen 220, die auch in Ausschnitte 222 des Schieberschenkels 216 greifen. Auf der der Feder

- 15 -

0223940

218 abgewandten Seite des Schenkels 216 liegt eine eingelegte Kassette an. Die Nase 224 am Schieberschenkel 212 sitzt auf einem ausgeschnittenen, elastisch federnden Lappen 226, so daß der Schieber in das Gehäuse eingeführt werden kann, wonach die Nase in den Schlitz 228 in dem Boden 204 einfällt und den Schieber gegen Herausfallen sichert, wenn er das Ende seines Auswerfehubs erreicht, indem sie auf die Endkante 230 aufläuft.

Am frontseitigen Ende des Schieberschenkels 212 ist der Deckel 232 angelenkt. Die Anlenkung ist ähnlich wie bei der ersten Ausführungsform ausgebildet, jedoch ist die Hülse 234 hier auf etwa 90° ausgeschnitten, um den Öffnungswinkel des Deckels zu begrenzen, und es ist eine Schnappsicherung zwischen Schieber und Deckel vorgesehen, mit 236 bezeichnet. Der nur einseitig gelagerte Deckel ist durch zwei Rippen 238 versteift. - Der an den Deckel angeformte Verriegelungshaken 240 greift bei geschlossenem Behälter in das Gehäuseloch 242. Mit dem Pfeil 244 ist angedeutet, wo der Benutzer auf den Deckel zu drücken hat, um die Verriegelung zu lösen (vgl. auch Fig. 19); wegen der einseitigen Anlenkung des Deckels ist die Auslösung an dieser Stelle bevorzugt. - Alternativ kann man eine Strebe 246 vom Schenkel 212 des Schiebers bis zur Deckwandung hochziehen und so eine zweite Anlenkstelle 248 für den Deckel schaffen, dargestellt in Fig. 17 und 18. Dies ergibt eine Verbesserung der Verwindungssteife des Deckels 232'.

Noch einfacher als bei Fig. 10 bis 13 läßt sich bei dieser Ausführungsform die Zusammenfassung mehrerer Aufnahmeabteile in einem gemeinsamen Gehäuse realisieren. Dies ist in Fig. 19 und 20 gezeigt.

Wie man aus der Erläuterung der Fig. 14 bis 16 entnehmen konnte, haben die Seitenwände 208 nur nahe der Bodenwandung 204 Funktionsteile, so daß man bei dem Blockgehäuse den Rest der Wände entfallen lassen kann. Es sind nur Trennstege 250 vorgesehen, an denen sich die eingesetzten Kassetten abstützen und die Verdickungen 252 tragen entsprechend den Rippen 220, 214 auf den bodenseitigen Restwänden 208'. Feder 218, Schieber 210 und Deckel 232 entsprechen der vorhergehenden Beschreibung, wobei allerdings der Deckel im Profil (vgl. Fig. 20) bei 254 abgestuft ist, um den Auslenkweg für den Entriegelungsvorgang freizumachen, aber ohne daß dadurch ein hässlicher offener Schlitz entsteht. Im Bereich 256 können Etiketten aufgeklebt sein oder hinter einem transparenten Fenster eingesetzt werden.

Damit auch Kassetten kleinerer Außenabmessungen untergebracht werden können, sind in allen Abteilen des Gehäuses bzw. in dem Innenraum eines Einzelbehälters - dargestellt in Fig. 14 bis 16 - Blattfedern 260 befestigt, z.B. durch Einklemmen eines verdickten Endes 262, wie dargestellt. Am freien Ende der Blattfeder ist ein Haken 264 abgewinkelt, an dem eine kürzere und schmalere Kassette anschlägt. Eine breitere Kassette dagegen lenkt beim Einschieben die Blattfeder bereits bei deren Wölbung 268 aus, so daß der Haken unwirksam wird, wie gestrichelt dargestellt. Im übrigen erfüllt die Feder 260 noch die Funktion der Bremse 106 aus Fig. 2.

Fig. 21 bis 24a zeigen ein zweites Ausführungsbeispiel. Das Gehäuse 900 ist auch hier in einen Aufnahmeraum für die Kassette und einen seitlichen Kanal unterteilt, und zwar erkennt man in Fig. 22 den H-förmigen Querschnitt des Auswerfers 902, der diesen Kanal ausfüllt und frontseitig mit einer Taste 904 abschließt. Wie aus Fig. 21 entnehmbar, weist der Auswerfer innen einen Auswerfarm 906 auf und von diesem weg erstreckt sich zur Gehäuseöffnung ein Längsschenkel 910, der durch die seitlichen H-Schenkel 912 geführt ist. Auf einen zweiten Arm, den Federarm 914, drückt die Schraubendruckfeder 916, die durch Rippen 918 gegen Ausknicken gesichert ist. Der Deckel 920 ist bei 922 schwenkbar an den Längsschenkel des Auswerfers angelenkt, so daß die Frontseite des Gehäuses auch im Bereich des Kassettenaufnahmeraums geschlossen ist.

An den Schenkel 910 des Auswerfers ist kanalseitig eine Kulisse 924 angeformt, deren Profil in Fig. 23 erkennbar ist. Mit der Kulisse wirkt ein Pfosten 926 zusammen, der an den Gehäuseboden 928 angeformt ist. Wenn, wie im dargestellten Ausführungsbeispiel, das Gehäuse und der Auswerfer ebenso wie der Deckel Kunststoffspritzteile sind, ist es zweckmäßig - wie dargestellt -, in den Boden 928 einen Durchbruch 930 einzubringen, durch den beim Spritzen der entsprechende Formstempel ragt. Der Pfosten 926 hat einen Querschnitt mit einer Haltekante 932, die sich in einem komplementären Einschnitt der Kulisse 924 fängt, wenn der Auswerfer im Gehäuse verriegelt ist.

Zum Entnehmen einer eingelegten Kassette drückt man auf die Taste 904, womit die Kulisse relativ zum Pfosten 926 verschoben wird. Ihre Steuerkante 934 drückt dabei den elastisch auslenkbaren Pfosten 926 nach unten in Fig. 23 weg, bis er wieder in seine Ruhelage zurückschnellen kann, sobald er von der Kulisse freigegeben wird. Läßt nun der Benutzer mit dem Druck auf die Taste nach, drückt die Steuerfläche 936 den Pfosten wieder beiseite, jetzt in der entgegengesetzten Richtung, und die einschnittfreie Kante 938 der Kulisse gleitet am Pfosten vorbei, so daß der Auswerfer die Kassette mit nach außen transportiert. Beim Schließen bringt die Steuerkante 940 der Kulisse den Pfosten 926 wieder in die in Fig. 23 dargestellte Position.

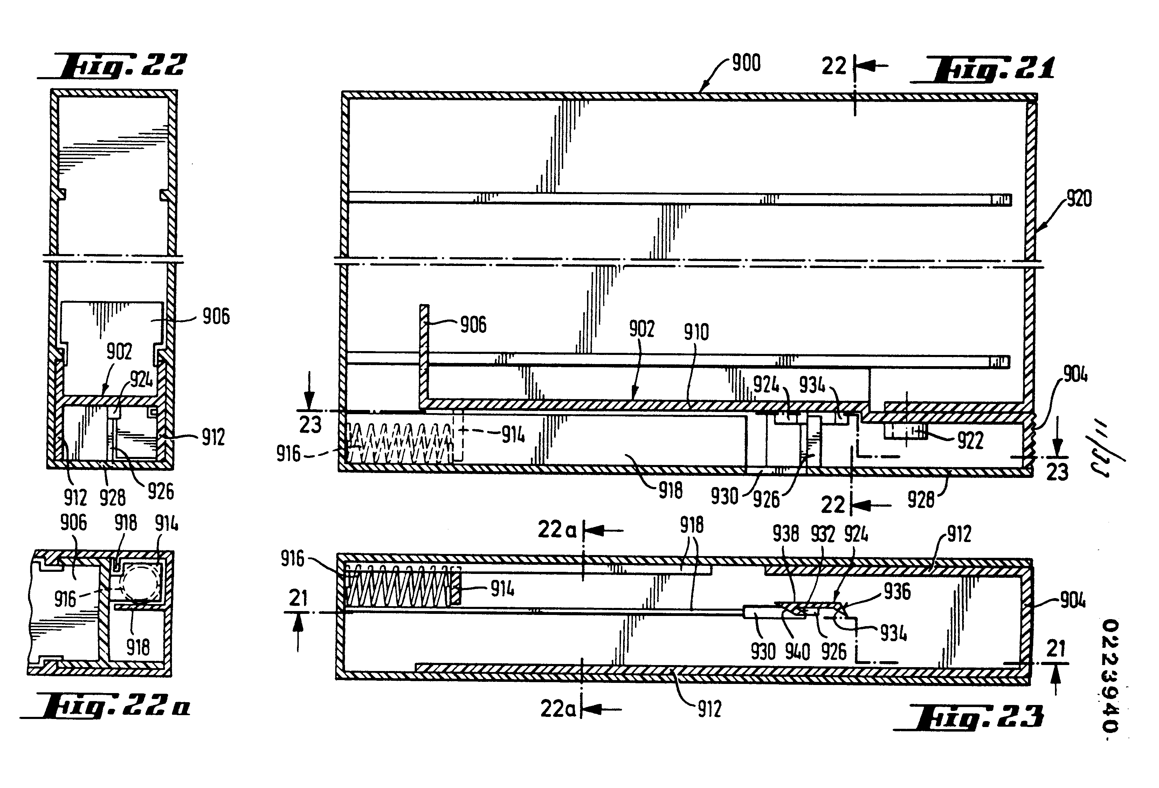

Zusammen mit der Kassette wird der gesamte Auswerfer nebst an ihne angelenktem Deckel nach vorn transportiert. Im Gelenk des Deckels ist eine Feder, vorzugsweise eine Schenkelhalsfeder, so eingefügt, daß der Deckel in die Offenstellung gemäß Fig. 24 vorgespannt ist. Beim Schließen läuft der Deckel mit seiner Wange 942 auf die Gehäuseendkante auf und wird dadurch geschlossen, wie in Fig. 24a mit ausgezogenen Linien dargestellt.

Was oben zu den Ausführungsformen bezüglich Stapelung von Einzelgehäusen bzw. Ausbildung von Blockgehäusen, Begrenzung des Auswerfweges usw. gesagt worden ist, läßt sich sinngemäß auch bei dem zuletzt beschriebenen Ausführungsbeispiel anwenden.

Fig. 25 zeigt, wie ein auf den Schieber 40 gemäß Fig. 1-13 aufgesetzter Adapter 400 die Anpassung an kürzere Kassetten ermöglicht. In ähnlicher Form ist der Adapter 400' ausgebildet, der mit einer Zunge 402 in einen Durchbruch 404 im kürzeren L-Schenkel eines Schiebers 210 gemäß Fig. 14-16 einschiebbar und durch Druckknopf 406 festgelegt werden kann, der in ein zu diesem Zweck vorgesehenes Loch 408 im Schieber greift.

Die Fig. 17a und 18a zeigen in analoger Darstellung wie die Fig. 17 bzw. 18 ein weiteres Ausführungsbeispiel.

Das Gehäuse 500 weist wiederum im wesentlichen rechteckige Gestalt auf. An seiner Rückwand 502 stützt sich die Auswerfefeder 504 ab, die als Schraubendruckfeder ausgebildet ist und auf den Querschenkel 506 des Transportschiebers 508 einwirkt. Der Querschenkel 506 ist schmaler als die lichte Weite des Gehäuses, wie man deutlich in Fig. 17a erkennen kann, und an seine beiden Enden schließen sich Längsschenkel 510 bzw. 512 an. Diese dienen der Führung des Schiebers, zu welchem Zweck an das Gehäuse Führungsrippen 514 angeformt sind, welche die Längsschenkel hintergreifen. Wegen der schmaleren Ausbildung des Querschenkels kann dieser beim Herausgleiten des Schiebers aus dem Gehäuse an diesen Führungsrippen vorbeigleiten, ebenso an den weiteren Rippen 516, die die Feder 504 gegen Ausknicken sichern.

Der untere Längsschenkel 512 ist - ähnlich Fig. 17 und 18 - mit U-förmigem Querschnitt ausgebildet, während der obere Längsschenkel 510 glatt an der oberen Deckwand anliegt. Der Grund für diese unterschiedliche Ausbildung liegt darin, daß beim Einlegen einer Kassette unten die verschwenkte Wange 517 des Deckels 518 stören würde, während dies oben nicht der Fall ist. Allerdings könnte man auch oben den Längsschenkel so wie unten ausbilden. Die Nase 524 entsprechen in ihrer Funktion den Nasen 224 aus Fig. 15, wobei natürlich die Nase 526 am oberen Längsschenkel kleiner ausfällt. - Die Ver- und Entriegelung ist wie in Fig. 14 ausgebildet. Versteifungsrippen 528 verringern die Durchbiegung des Querschenkels 506 unter der Wirkung der Feder 504.

Es kann zweckmäßig sein, bei dem Behälter nach den vorbeschriebenen Ausführungsformen die Auswerfbewegung der Kassette zu dämpfen, etwa indem man eine Kolben-Zylinderanordnung mit Luftdurchtrittsdrosselung vorsieht.

Bei der Ausführungsform nach Fig. 28 und 29 sind der Schieber 600 und eine Deckelbaugruppe 602 ein einstückiges Spritzgußteil, wobei das Gelenk 604 ebenfalls gleich angespritzt ist. In einem Ausschnitt 606 im mittleren Gelenkbereich ist eine

0223940

Schenkelhalsfeder 608 so eingesetzt, daß die Deckelbaugruppe 602 in die in Fig. 29 dargestellte (in Fig. 28 gestrichelt angedeutet) Entnahmeposition der Kassette 610 vorgespannt ist. Mit Nasen 612 ist die Längsplatte 602' in Ausnehmungen des Gehäuses 614 verriegelt. und die Verriegelung läßt sich durch Druck auf die Taste 616 lösen. Im Gegensatz zu der ersten beschriebenen Ausführungsform ist hier keine Bodenplatte des Schiebers vorgesehen, sondern der Schieber ist mit einer "Deckplatte" 618 an der Oberseite des Gehäuses geführt. Im übrigen besteht im wesentlichen Übereinstimmung zwischen beiden Ausführungsbeispielen.

In den bisher beschriebenen Figuren war der Deckel durch eine Federvorspannung im Bereich seines Gelenks in die Entnahmeposition der Kassette vorgespannt. Fig. 30 zeigt, daß die Federvorspannung der Auswerfe- oder Hauptfeder auch mittelbar die Öffnung des Deckels bewirken kann: Der am Schieber 700 bei 702 mittels Zapfen angelenkte Deckel 704 weist einen in das Gehäuseinnere ragenden Fortsatz 706 auf, an den ein Zapfen 708 angeformt ist. Dieser greift in eine Nut 710, die im Innern des Gehäuses in der schmalen Wandung 712 ausgenommen ist. In der dargestellten Öffnungsposition bildet das Ende der Nut den Anschlag für die Begrenzung des Aufklappwinkels; schiebt man nun die Kassette hinein, wird der Zapfen längs der Nut geführt und verschwenkt den Deckel wieder in seine Schließlage. Beim Öffnen läuft der umgekehrte Vorgang ab. Diese Art der Deckelbetätigung ist besonders vorteilhaft, wenn der Deckel nicht zugleich auch Entriegelungsorgan ist.

Die Fig. 31 bis 45 beziehen sich auf eine weitere Ausführungsform, wobei die Fig. 33 und 37 bis 39 mögliche Varianten darstellen.

Bei dieser Ausführungsform sind jeweils fünf Kassetten in einem gemeinsamen Behälter untergebracht. Es versteht sich aber, daß diese Zahl nicht zwingend ist und daß für andere gewünschte Zahlen der Fachmann die geringfügigen Änderungen leicht selbst konzipieren kann. Der Behälter ist so ausgebildet, daß er mit weiteren gleichartigen Behältern stapelbar ist.

Fig. 31 zeigt den Behälter von vorn. In dem Gehäuse 800 sind fünf Schieber 801 geführt, deren Deckel 802 in einen oberen Abschnitt 803, der ein Etikett aufnehmen kann, und einen unteren Abschnitt mit einer Taste 804 aufgeteilt ist.

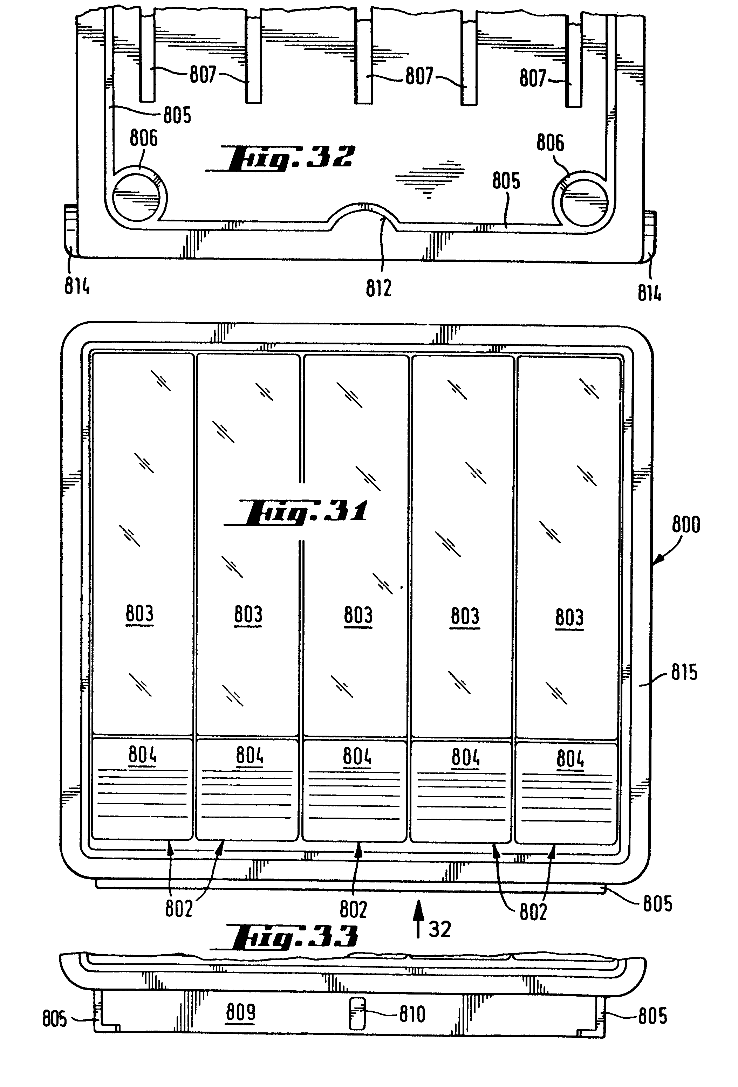

Das Gehäuse 800 besitzt einen Fuß 805, der als umlaufender Kantsteg in Fig. 32 erkennbar ist und in seinen Eckausrundungen kreisförmige Aufnahmen 806 für einsteck- oder einklebbare Haftfüßchen 811 besitzt. In den parallelen Schlitzen 807 des Gehäusebodens laufen die Anschlagnasen 808 der Schieber, welche deren Ausschubweg begrenzen.

Gemäß Fig. 33 kann der Fuß 805 als Seitenführung für eine flache Schublade 809 mit Griff 810 ausgebildet sein; in einer solchen Schublade kann man Informationsmaterial zu den Aufzeichnungen der eingelegten Kassetten unterbringen.

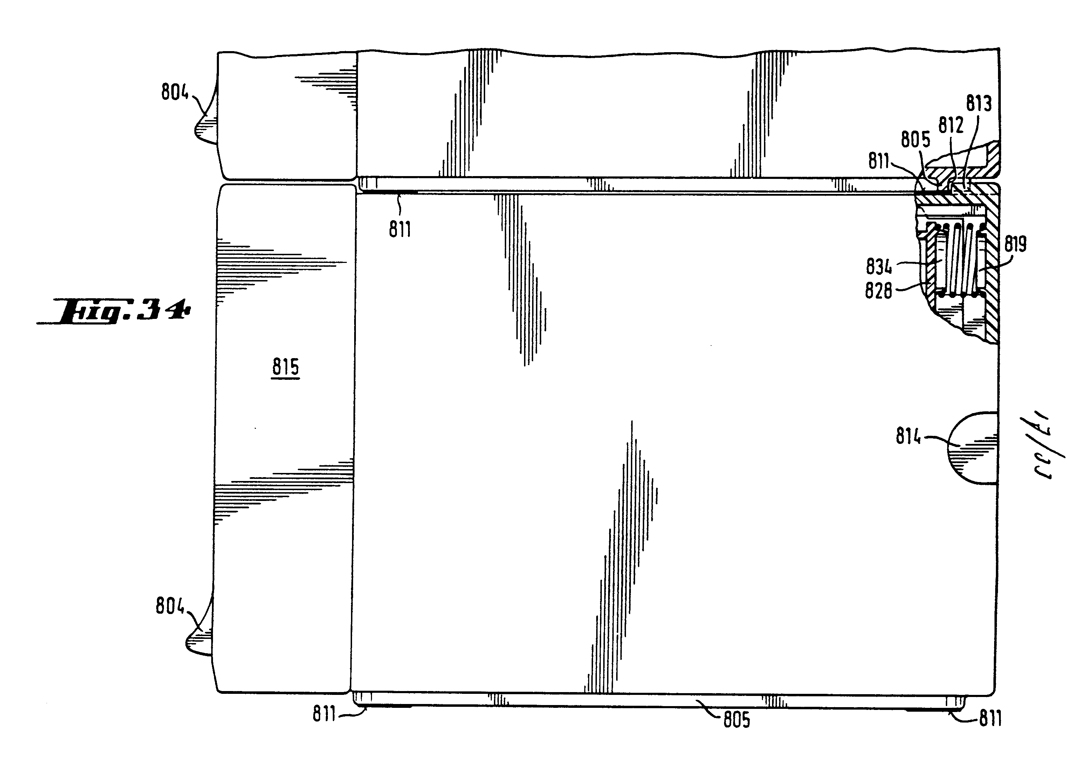

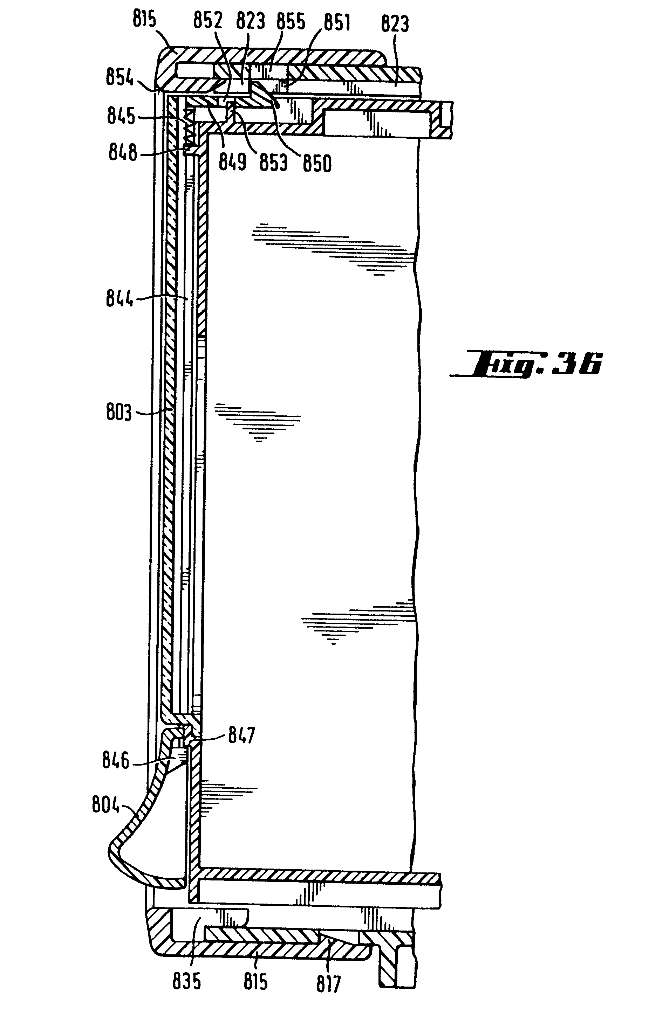

Die Einbuchtung 812 des Fußes dient als Zentrierung beim Stapeln, zu welchem Zweck an der Oberseite des Gehäuses ein komplementärer Zentriernocken 813 vorgesehen ist. Ebenfalls an das Gehäuse 800 hinten angeformt sind seitliche Distanznocken 814 für das seitliche Aneinanderreihen mehrerer gleichartiger Behälter. Der frontseitige Gehäusekragen 815 ist geringfügig höher als die hinter ihm anschließende Deckwand 816 des Gehäuses, wie man in Fig. 34 erkennt, in der ein weiterer Behälter aufgesetzt ist. Der Gehäusekragen 815 ist ein getrennt gefertigtes Teil, das auf das Gehäuse 800 aufgeschnappt ist, und zwar an mehreren Stellen seines Umfangs; eine solche Schnappverbindung ist in Fig. 36 bei 817 erkennbar, wobei Niederhalter 835 die Gehäusefrontkante von der anderen Seite abstützen.

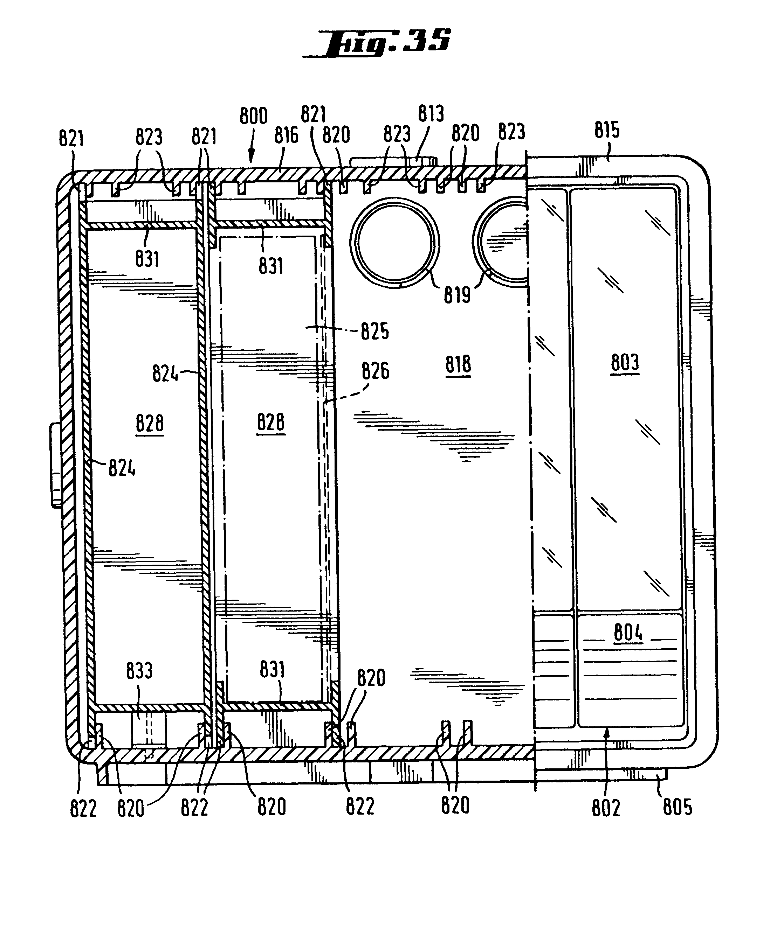

Der linke Teil der Fig. 35 zeigt einen Blick in ein aufgeschnittenes Gehäuse 800 auf dessen Rückwand 818. Man erkennt im mittleren Bereich der Zeichnung, daß für jeden Schieber in dem zugehörigen Gehäusefach ein Halte- und Zentrierring 819 für eine Auswerffeder (wie in Fig. 34 angedeutet, handelt es sich um eine einfache Schraubenfeder) an die Rückwand 818 angeformt ist. Die Führungsrippen 820 greifen jeweils zwischen obere Kufen 821 bzw. untere Kufen 822 des Schiebers, die zur Herabsetzung der Haftreibung möglichst kleinflächig ausgebildet sind;

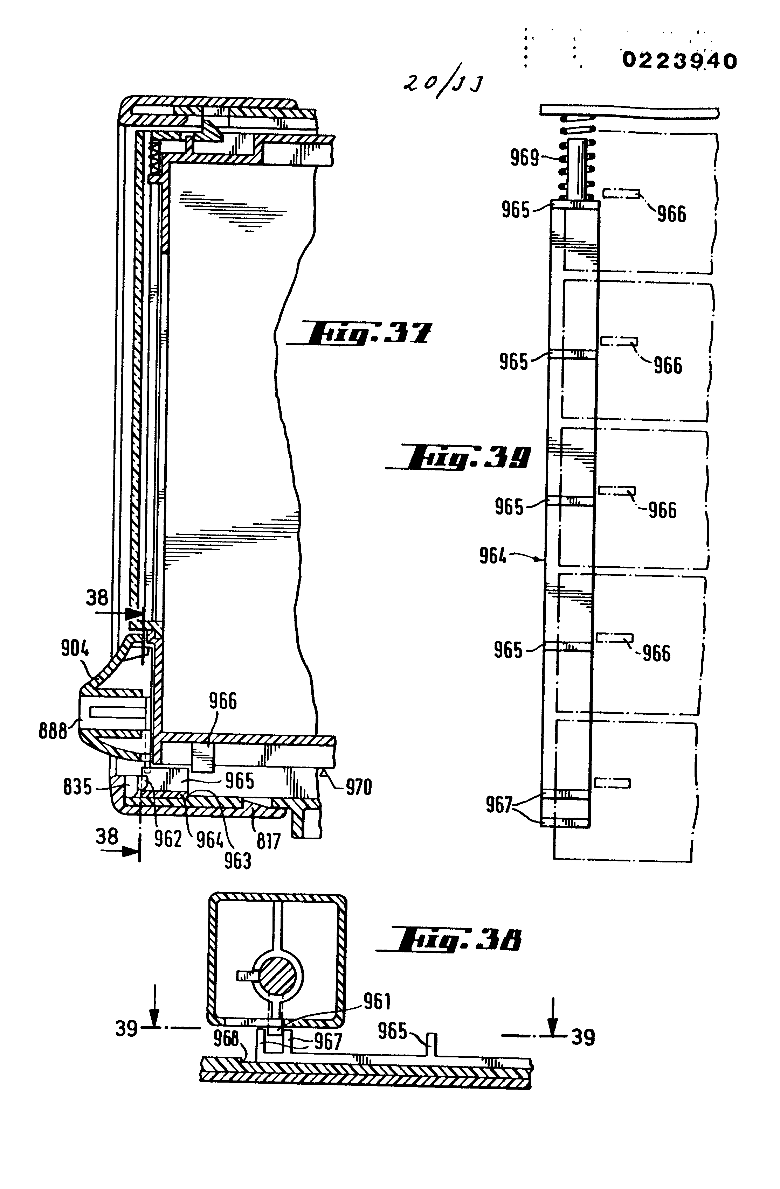

zwischen den Führungsrippen sind weitere Stege 823 vorgesehen, an denen sich der Schieber - wie noch zu erläutern - verriegelt. In das linke Aufnahmefach des Gehäuses ist ein Schieber in einer Schnittdarstellung etwa in der Ebene A-A der Fig. 40 eingezeichnet, in der er Vertikalstreben 824 aufweist. Im an dieses anschließenden Aufnahmefach ist der Schieber etwa in der Ebene B-B geschnitten eingezeichnet, und eine eingelegte Kassette 825 ist mit ihrem Umriß strichpunktiert angedeutet. Ein etwa miteingelegter Programmzettel 826 oder dergleichen kann die Bewegung des Nachbarschiebers nicht behindern, da er von den Vertikalstreben 824 abgestützt wird.

Fig. 40 bis 45 zeigen den Schieber im einzelnen. Er umfaßt einen rückseitigen Rahmen 827, an dessen Rückwand 828 auf der der Gehäuserückwand 818 zugekehrten Seite ein deren Zentrierring 819 entsprechender Zentrierring 834 sowie eine versteifende Kreuzverrippung 830 angeformt sind. Die beiden Horizontalstreben 831 haben das in Fig. 35 dargestellte H-Profil, dessen Querschenkel mit gewichtssparenden Durchbrüchen 832 versehen sind. In dem abwärtsgekehrten Kanal der unteren Horizontalstrebe ist ein Träger 833 für die oben erwähnte Anschlagnase 808 angeformt. Die seitliche Verrippung der Vertikalstreben dient der Formstabilität beim Spritzen des Rahmens 827 aus Kunststoff.

In Verlängerung des H-Profilquersteges der Horizontalstreben 831 erstreckt sich nach vorn (also links in Fig. 40) je ein Lagerauge 836, das nach innen abgestuft ist mit einer Kontur, wie sie in Fig. 41 gestrichelt eingezeichnet ist. Zentriert auf den Konturkreisbogen 837 ist eine Lagerbohrung 838 eingeformt - vgl. Fig. 43 -, durch die ein Lagerzapfen 839 an dem jeweiligen Horizontalarm 840 des Deckels 841 ragt, welcher durch Einschnappen gehalten ist. Die Durchbrüche 842 auf der dem Lager abgewandten Seite der Arme 840 ermöglichen das Entformen des Deckels beim Spritzgießen.

Die vertikale Stirnwand 843 des Deckels trägt eine vertikalverschiebliche Taste 804 mit integralem Schieberiegel 844, wobei der Aufbau am deutlichsten in Fig. 36 erkennbar ist.

Der Schieberriegel 844, an der Stirnwand 843 geführt, wird von einer Druckfeder 845 nach oben gedrückt in eine Position, in der die Nase 846 der Taste 804 an einer Stirnwandstufe 847 anliegt. Die Druckfeder stützt sich unten auf einem Stirnwandfortsatz 848 ab und wirkt oben auf einen Querarm 849 des Schieberiegels, der schließlich den Sperrhaken 850 trägt. Wie Fig. 36 erkennen läßt, greift der Sperrhaken 850 in der Einschubstellung in eine Aussparung 851 der Rippen 823. In eine Ausnehmung 852 im Querarm 849 greift ein Zapfen 853 des Deckelarms und stützt den Querarm beim Einschub des Schiebers ab, wenn der Sperrhaken durch Auflaufen auf die abgeschrägte oder abgerundete Kante 854 des Gehäusekragens heruntergedrückt wird. Der vom Gehäusekragen überdeckte Durchbruch 855 des Gehäuses ermöglicht das spritztechnische Vorsehen der Aussparung 851.

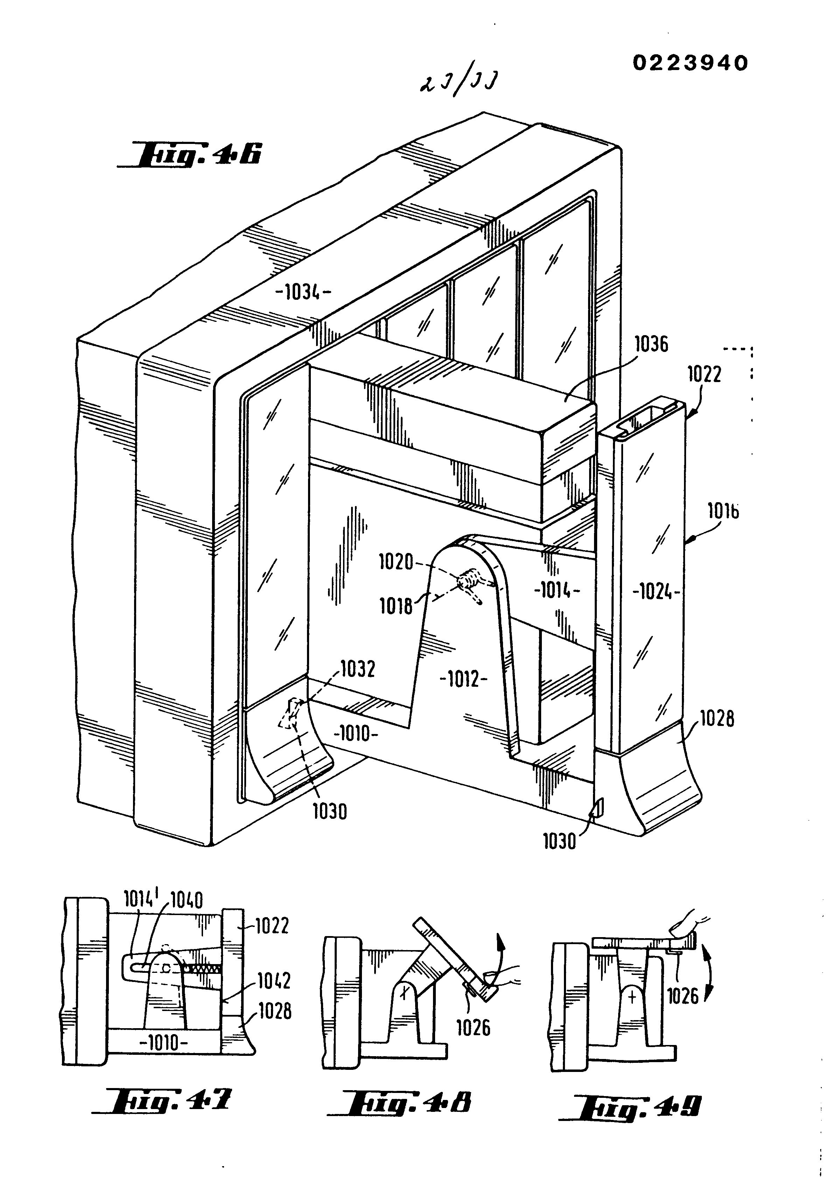

Vor dem Schieberiegel trägt der Deckel 841 ein Etikettenfenster 803 aus glasklarem oder matttransparentem Kunststoff. Dieses getrennt gespritzte Bauteil ist in Fig. 45 dargestellt; es wird mit Hakenfortsätzen 856 an seinen Seitenkanten 857 in entsprechende Aussparungen der komplementären Aufnahmerinnen 858 der Stirnwand 843 eingehangen, und ein ähnlicher Hakenfortsatz 859 greift durch eine etwa fingergliedgroße Aussparung der Stirnwand 843 und - natürlich - auch einer entsprechend großen Aussparung des Schieberiegels 844 und verhakt sich hinter jener an der Stirnwand. Die Fixierung erfolgt durch einschnappende Stifte 860. Diese Aussparungen machen ein eingelegtes Etikett zugänglich, so daß es nach oben ausgeschoben werden kann.

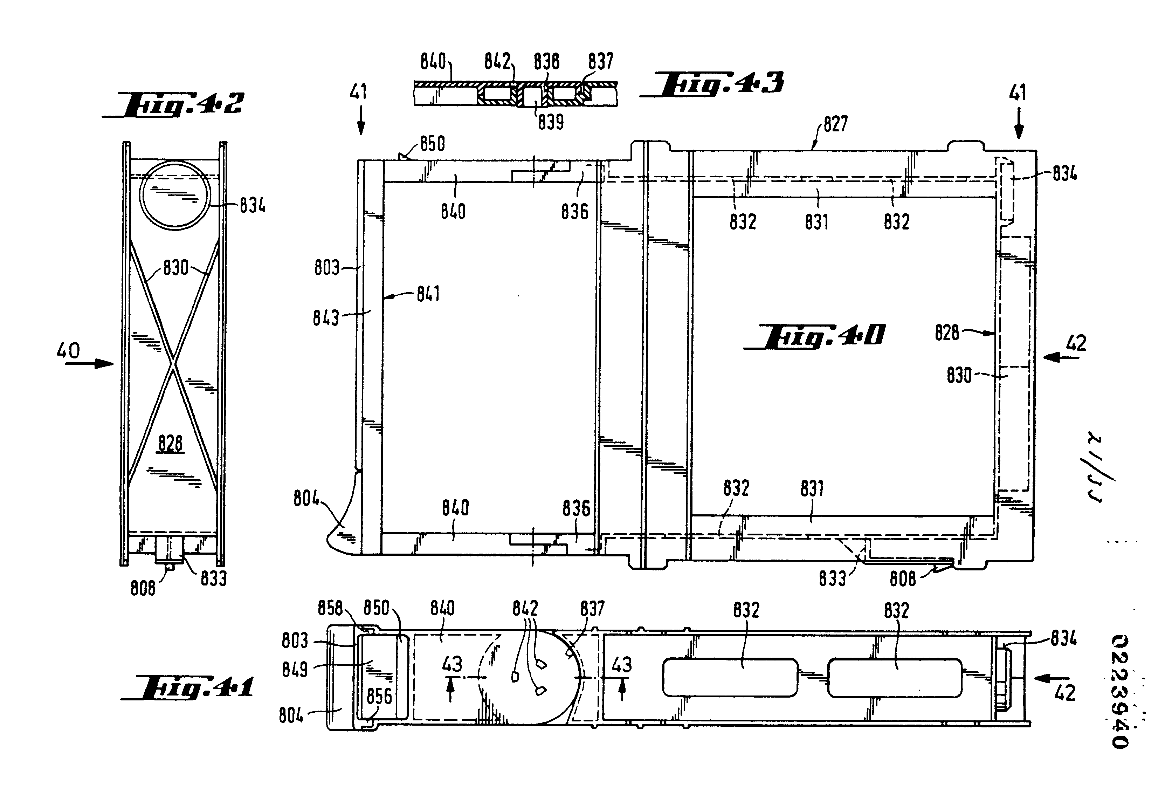

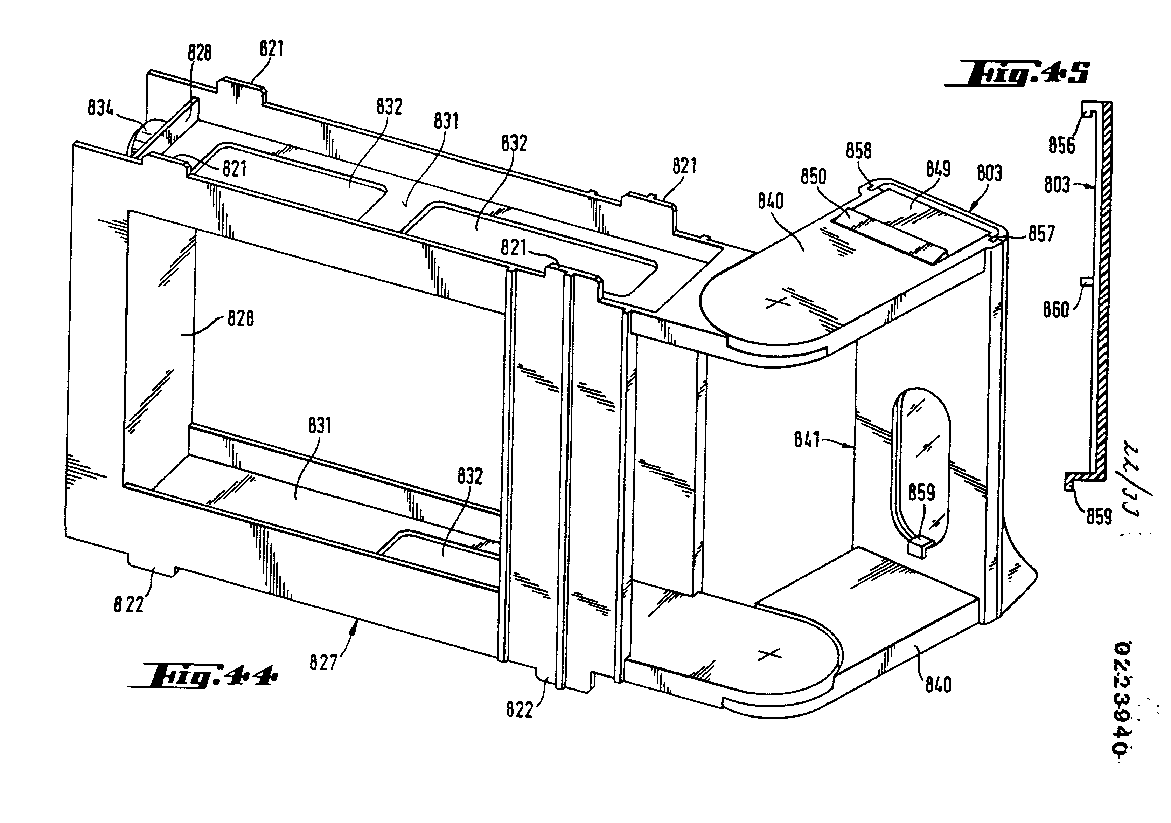

Es versteht sich, daß in dem einen Lager 838/839 eine den Deckel 841 in die in Fig. 44 dargestellte Position vorspannende Schenkelhalsfeder eingesetzt ist, ähnlich wie in Fig. 3 dargestellt.

Beim Druck auf die Taste 804 nach unten klinkt der Sperrhaken aus, und die Auswerffeder befördert den Schieber nach außen, bis die Nase 808 an dem Ende des Schlitzes 807 aufläuft; in dieser Position ragen die Lageraugen über den Gehäusekragen hinaus, und der Deckel wird von der Schenkelhalsfeder aufgeschwenkt.

Die Fig. 37 bis 39 zeigen eine Variante dieser Ausführungsform, bei der jedem Behälter ein Schloß zugeordnet ist.

In die Taste 904 ist ein handelsübliches Zylinderschloß 888 in Miniaturausführung eingesetzt, und dessen Sperrarm 961 steht in der Sperrposition vor einem angeformten Daumen 962 an dem Niederhalter 835, so daß die Taste nicht gedrückt werden kann. Damit man mit einem einzigen Schloß für alle fünf Fächer auskommt, liegt unter dem Daumen 962, nach innen von einer Gehäusestufe 963 abgestützt, ein verschiebliches Sperrglied 964 in Form einer Leiste mit hochstehenden Zinken 965. In der Verschließposition des Sperrgliedes stehen die Zinken genau vor Gegenzinken 966, jeweils an einen Schieber unten angeformt, so daß selbst beim Drücken einer Taste der Schieber nicht ausgeschoben werden kann. Zwischen ein Zinkenpaar 967 greift der Sperrarm 961 des Zylinderschlosses. Eine Druckfeder 969 spannt das Sperrglied in Öffnungsstellung vor, in welcher es an der Anschlagstufe 968 anliegt. — Die Linie 970 symbolisiert die unterste Ebene des Lagerauges, das also über die Zinken hinweggleiten kann.

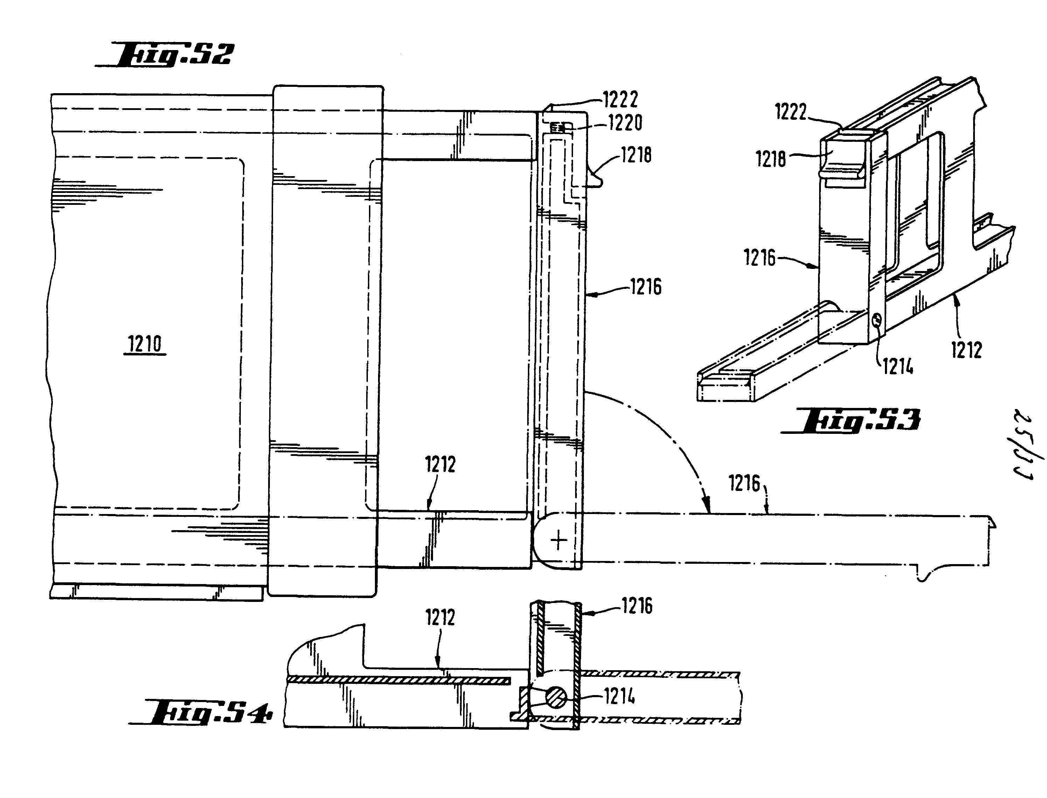

Fig. 46 bis 49 zeigen eine Variante, bei der am Schieber das Tor in anderer Weise gelenkig angeordnet ist. Von der Schiebersohle 1010 erstreckt sich nach oben eine Wange 1012, in der ein Hebelarm 1014 eines Tores, das insgesamt mit 1016 bezeichnet ist, um eine Achse 1018 drehbar gelagert ist. Im Bereich der Achse ist eine Schenkelhalsfeder vorgesehen, die das Tor 1016 in die in Fig. 49 dargestellte Position vorspannt. In der Endlage des Tores 1016, in der die Schenkelhalsfeder 1020 im wesentlichen entspannt ist, erreicht das Tor die in Fig. 49 dargestellte Position.

Das Tor selbst umfaßt eine Sichtplatte 1022, hinter deren glasklarer Frontpartie 1024 ein Etikett einsetzbar ist. In der Position nach Fig. 46 und 47 stützt sich diese Platte 1022 mittels eines Fußes 1026 auf der Sohle 1010 des Schiebers ab. Gleitverschieblich nach unten ist in der Platte 1022 die Taste 1028 geführt und von einer in den Zeichnungen nicht dargestellten Feder in die Position gemäß Fig. 47 vorgespannt, aus der sie nach unten wegbewegt werden kann. Bei dieser Wegbewegung wird ein Keilriegel 1030 aus der Falle 1032 herausgehoben, so daß eine im Gehäuse 1034 eingebaute Auswerffeder (in der Zeichnung nicht dargestellt) den Schieber in die Entnahmeposition nach vorn verschiebt. Die Schenkelhalsfeder 1020 verdreht nun, wenn der Benutzer den Finger löst und damit der Druck nachläßt (Fig. 48), das Tor in die Position nach Fig. 49, in der die Video-Kassette 1036 nach vorn in Fluchtlinie mit der Gehäuseöffnung herausziehbar ist. Zum Aufräumen der Kassette wird diese in umgekehrter Richtung in das Gehäuse eingeschoben bis zu einem (nicht dargestellten) Anschlag, und der Vorgang läuft in umgekehrter Reihenfolge, also Reihenfolge Fig. 49, Fig. 48, Fig. 47, ab. Zum Schluß drückt der Benutzer auf die Platte 1022, wobei die Taste 1028 im Zusammenwirken der Keilflächen an dem Keilriegel 1030 und der Falle 1032 wieder verriegelt wird.

In einer nur in Fig. 47 angedeuteten Variante ist der Hebelarm 1014' mit einem Langloch 1040 versehen, so daß er unmittelbar an der Frontseite 1042 der Kassette anliegend in der Schließstellung die Kassette sichern kann. Bei Betätigung der Taste fährt sowohl der Schieber 1010 aus dem Gehäuse, als auch die Platte 1022 mit der Taste 1028 längs des Langlochs, so daß das Tor in eine Position gelangt, in der es nach oben über die vordere obere Endkante der Kassette kippen kann.

Bei der Ausführungsform nach Fig. 50 und 51 schwenkt das Tor um eine andere Achse. Man erkennt das Gehäuse 1110 mit drei Schiebern 1112. Ein Schieber ist in dem ausgefahrenen Zustand, wobei jedoch die um den Zapfen 1114 drehbare Taste 1116, die zugleich das Tor bildet, noch in der Verriegelungsposition steht. Die Taste weist z.B. für die Verriegelung eine Falle 1118 auf, und dem Zapfen-Schwenklager 1114 ist eine Feder (nicht gezeichnet) zugeordnet, z.B. eine Schenkelhalsfeder, die das Bauelement Taste, hier identisch mit dem Tor, in die in Fig. 50 gestrichelt dargestellte Position vorspannt. Diese Endlage kann durch Anschläge gesichert sein.

Um eine noch andere Achse schwenkt das Tor bei der Ausführungsform nach Fig. 52 bis 54.

Hier erkennt man links in der Seitenansicht gemäß Fig. 52 das Gehäuse 1210, längs dem der Schieber 1212 gleitbeweglich ist. Die Schiebersohle weist senkrecht zur Verschiebebewegung ein Zapfenlager 1214 auf, um das das Tor 1216 verdrehbar ist, nachdem es durch Relativverschiebung der Taste 1218 entgegen der Wirkung der Feder 1220 aus dem Gehäuse entriegelt worden ist, mittels Riegel 1222. Die Bewegung des Tores nach unten in die Horizontale erfolgt durch Schwerkraftwirkung oder eine eingebaute Feder, falls dies bevorzugt ist.

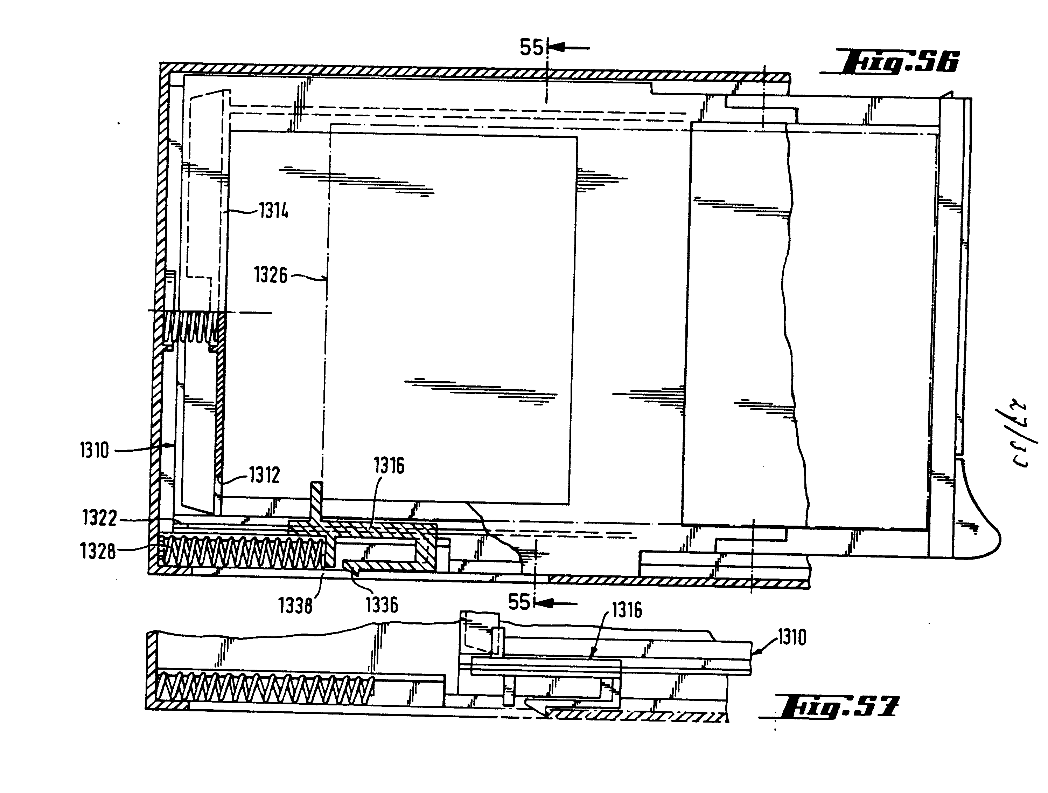

Fig. 55 bis 60 zeigen eine alternative Bauart eines Videokassettenbehälters für unterschiedliche Kassettenformate. Dabei ist Fig. 55 ein Schnitt nach Linie 55-55 der Fig. 56, wleche ihrerseits einen Vertikal-Teil-Längsschnitt durch den Behälter zeigt. Fig. 57 entspricht dem unteren Teil der Fig. 56, jedoch in anderer Betriebslage, und Fig. 58-60 stellen Details perspektivisch dar.

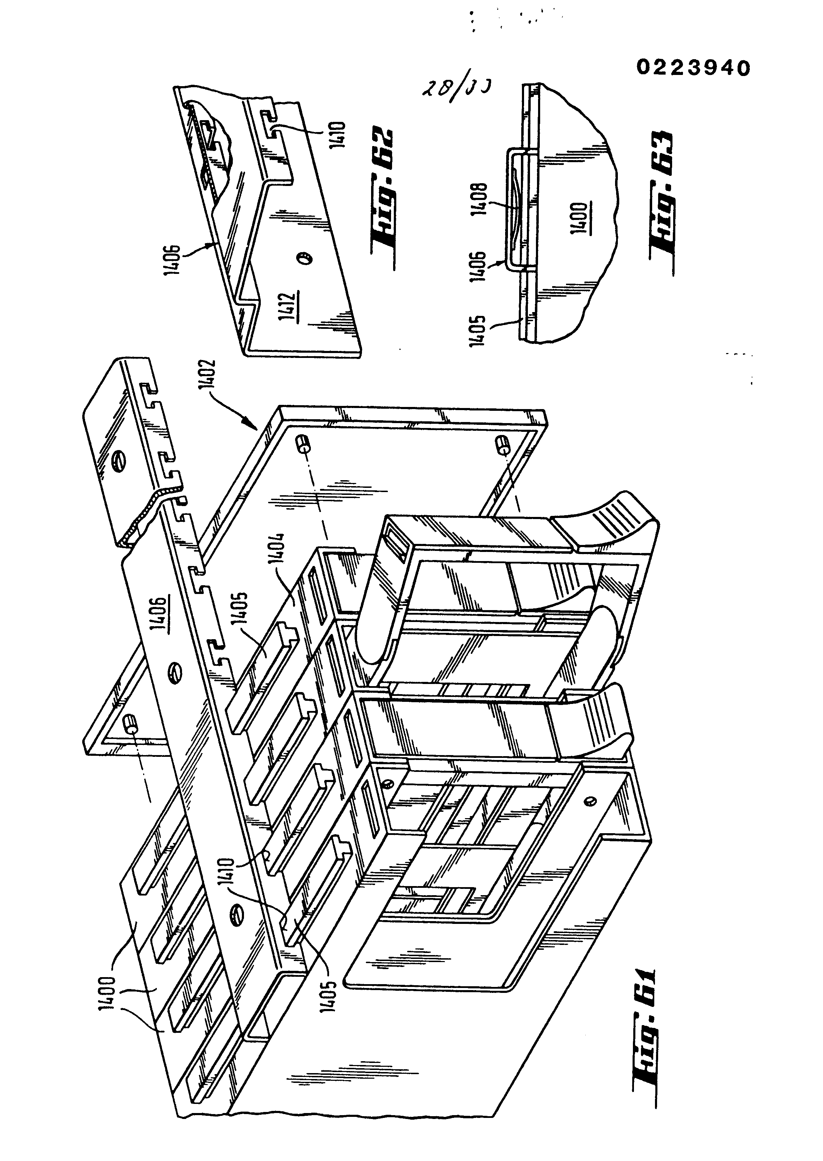

Der Schieber 1310 ist in der Fig. 55 im Querschnitt dargestellt. Er hat einen Durchbruch 1312 in seiner Rückwand 1314, so daß ein Unterschieber 1316, der in Fig. 58 perspektivisch gezeichnet ist, hindurchtreten kann. Die seitlichen Schlitze 1318 des Unterschiebers werden in entsprechenden Stegen 1320 des Schieberbodens geführt; für die Montage weisen die Stege 1320 an ihrem freien hinteren Ende Nasen 1322 auf, welche beim Einschieben des Unterschiebers 1316 horizontal zur Seite gedrückt werden und dann verhindern, daß der Unterschieber herausfallen kann; die Enden der beiden Stege sind in Fig. 59 bzw. 60 gezeichnet. Der Unterschieber hat einen nach oben ragenden Lappen 1324, der sich jeweils von hinten an die hintere Stirnwand einer eingelegten Kassette anlegt, wie in Fig. 56 durch die strichpunktierte Linie 1326 angedeutet ist. Eine Hilfsfeder 1328 drückt den Unterschieber 1316 in Richtung auf das Tor 1330. Die Hilfsfeder 1328 ist so ausgelegt, daß sie nach einem in Fig. 57 dargestellten Federweg vollständig entspannt ist. Der Unterschieber 1316 weist einen zweiten Lappen 1334 auf, an dem sich die Feder 1328 abstützt.

Schließlich ist an dem Unterschieber auch noch eine Anschlagnase

1336 vorgesehen, die in den bodenseitigen Schlitz 1338 des Kassettengehäuses greift und den Hauptanschlag für den Schieber darstellt. Die stationären Stege 1340 sorgen dafür, daß die Hilfsfeder 1328 nicht seitlich ausknicken kann. Zu beachten sind noch die seitlich der Schlitzführungen 1318 vom Schieberboden hochstehenden Stützschienen 1344, auf denen die jeweils eingelegte Kassette ruht, so daß der Unterschieber 1316 vom Gewicht der Kassette selbst entlastet ist.

Die Fig. 61-63 zeigen in perspektivischer Darstellung (Fig. 61) eine "Mediathek", das heißt eine zu einer Baugruppe zusammengefaßte Serie von gleichartigen Behältern, die sämtlich Videokassetten, aber - wie noch zu erläutern sein wird - auch andere Aufzeichnungsträger aufnehmen kann.

Hier sind die einzelnen Behälter 1400 mit Gehäuse ausgestattet, die auf beiden großen Seitenflächen ausgeschnitten sind, da gemäß den vorstehend geschilderten Ausführungsformen an diesen Stellen funktionell kein Material benötigt wird; dies dient der Materialersparnis. Endplatten 1402 können solche Serien von ausgeschnittenen Gehäusen ästhetisch ansprechend abschließen.

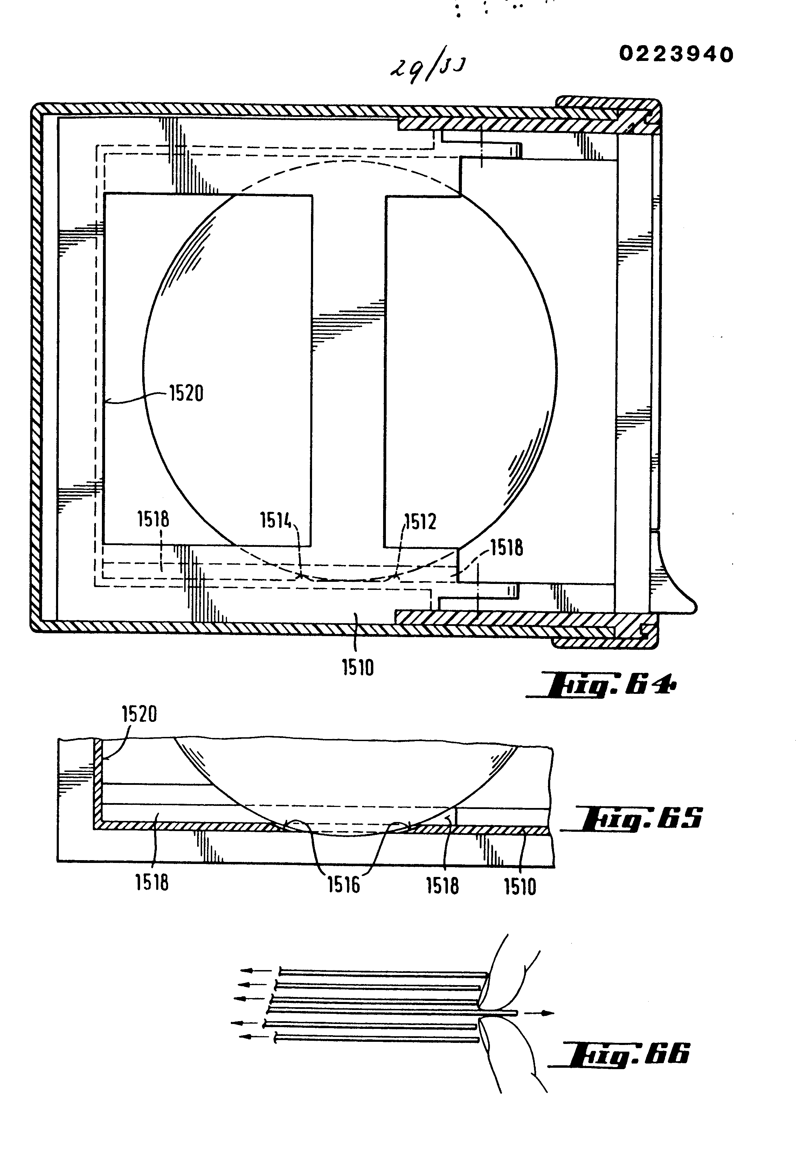

An ihren Oberkanten 1404 weisen die Gehäuse der Behälter 1400 je eine Schiene 1405 mit hinterschnittenem Profil, etwa T-Profil wie in Fig. 61 dargestellt, auf, und eine Traverse 1406 hat zu diesem Profil komplementär ausgebildete Ausschnitte 1410 in den freien Schenkeln ihres U-förmigen Querschnitts. Die Teilseitenansicht nach Fig. 63 läßt erkennen, daß in die Traverse eine Blattfeder 1408 eingelegt ist, die sich über die gesamte Traversenlänge erstreckt und dafür sorgt, daß trotz des toleranzbedingten Spiels zwischen den T-Schienen und den Ausschnitten 1410 die Behälter einigermaßen fest sitzen. - Fig. 62 zeigt eine Abwandlung der Traverse, die hier um ein Winkelstück 1412 ergänzt ist, mittels dem die Traverse an der Wand anschraubbar ist.

Die Fig. 64 bis 70 zeigen Abwandlungen insbesondere des Schiebers zur Aufnahme von anderen Aufzeichnungsträgern, nämlich sogenannte Compact-Discs. Die Schiebersohle 1510 weist entweder einen frontseitigen Nocken 1512 und einen rückseitigen Nocken 1514 auf oder aber, wie in Fig. 65 als Alternative dargestellt,

schlitzartige Einsenkungen 1516, deren Kontur - wie in Fig. 65 erkennbar - wannen- oder muldenförmig ist. Zwischen den Nocken 1512 und 1514 bzw. den Einsenkungen 1516 sind Rillen 1518 vorgesehen, welche das Einschieben der Compactdiscs erleichtern.

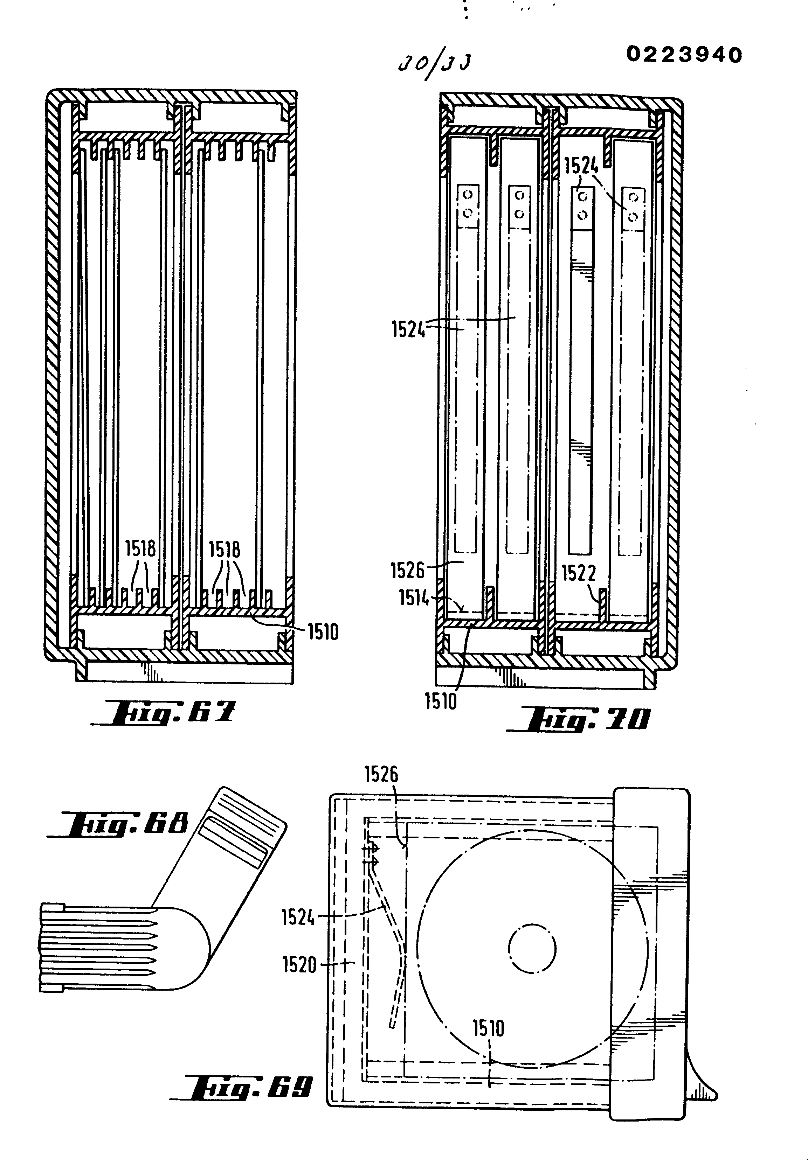

Wenn eine größere Anzahl von Compactdiscs dicht nebeneinander in dem Schieber untergebracht sind, wie dies in Fig. 67 verdeutlicht wird, ist es für den Benutzer gegebenenfalls schwierig, eine gewünschte "disc" mit seinen Fingerspitzen zu erfassen. Aus diesem Grunde ist die Konstruktion so getroffen, daß der Benutzer die benachbart zu der von ihm gewünschten liegenden Scheiben nach hinten wegdrücken kann (sh. Fig. 66). Der Abstand der Rückwand von der Position von Nocken 1514 bzw. hinterer Begrenzung des Schlitzes 1516 ist so bemessen, daß der Schwerpunkt der "discs" sich noch immer innerhalb des von den Nocken 1512 und 1514 begrenzten Bereichs bzw. innerhalb des Bereichs über dem Schlitz 1516 befindet, so daß die zurückgedrückten "discs" unter Schwerkraftwirkung wieder in ihre Ruheposition zurückkehren können. Alternativ kann man an der Rückwand 1520 eine Feder anbringen, die die "discs" in ihre Ausgangsposition zurückdrückt: Siehe schematische Darstellung in Fig. 69, wo die Feder 1524 erkennbar ist.

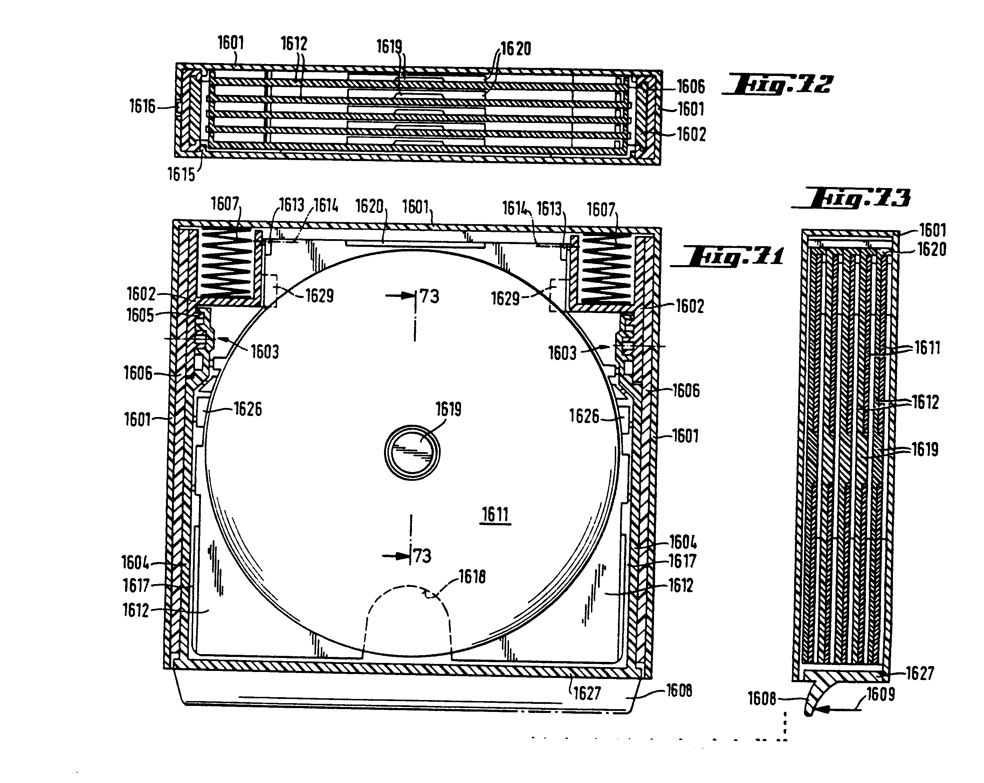

Fig. 67 bzw. 70 zeigen Teilquerschnitte von Behältern mit zwei unterschiedlichen Typen von Schiebern, von denen Fig. 67 eine Ausführung zeigt, bei der die insoweit erläuterte, aber bei Fig. 70 dagegen anstelle von Führungsrillen 1518, Nockenpaaren 1512, 1514 bzw. Einsenkungen 1516 Trennlappen 1522 vorgesehen sind, die jeweils eine Kammer für eine Aufbewahrungsschachtel oder Verkaufspackung 1526 jeweils einer einzelnen Compactdisc begrenzen. Wie zuvor, kann man auch hier eine Feder vorsehen, die die jeweils nicht zu entnehmende Packung in die Speicherposition zurückdrückt, nachdem die gewünschte Packung entnommen worden ist; diese Feder ist wie in Fig. 69 in Fig. 70 mit 1524 angedeutet.

Die Fig. 71 bis 80 beziehen sich auf weitere Varianten des Behälters zur Aufbewahrung von scheibenförmigen Datenträgern, wobei der Einfachheit halber hier wieder auf Compactdiscs bezuggenommen wird.

Fig. 71 zeigt einen solchen Behälter im schematisch dargestellten Längsschnitt, und zwar geschlossen. Im Gehäuse 1601 ist gleitbeweglich der Schieber 1602 aufgenommen, an den um ein Gelenk 1603 schwenkbar ein Tor 1604 angelenkt ist. In dem Gelenk ist, ähnlich wie bei oben erläuterten Ausführungsformen, eine Schenkelhalsfeder untergebracht, die das Tor in die weggeschwenkte Öffnungsposition vorspannt, deren Winkellage durch einen Anschlag 1605 bestimmt ist. Die Gleitkopplung mit dem Gehäuse erfolgt über eine Teleskopführung, damit der Schieber praktisch vollständig aus dem Gehäuse ausfahren kann; demgemäß ist noch eine Zwischenschiene 1606 auf beiden Seiten vorgesehen. Der maximale Auszugsweg der Zwischenschiene wird durch einen Anschlagnocken 1616 festgelegt, der in einem Gehäuseschlitz läuft. Rippen 1615 des Gehäuses umgreifen beide Schienenaußenkanten und halten so die Schienen im Gehäuse, die ihrerseits mit ähnlichen Profilhaken den Schieber umgreifen. Dies ist am besten in der Querschnittdarstellung nach Fig. 72 erkennbar.

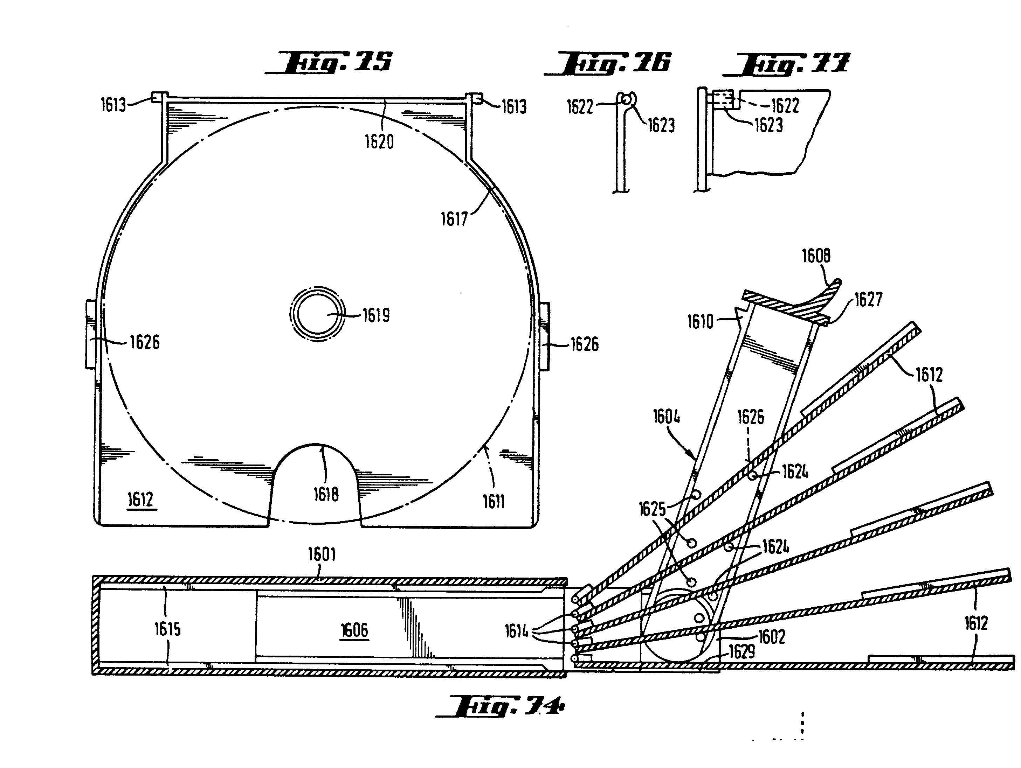

Schieber 1602 nebst Tor 1604 werden von Druckfedern 1607 aus dem Gehäuse herausgestoßen, sobald durch Fingerdruck auf die Taste 1608 in Richtung des Pfeiles 1609 der Sperrhaken 1610 (vgl. Fig. 74) aus einer Falle herausgehoben wird, die als Gehäusedurchbruch ausgebildet ist.

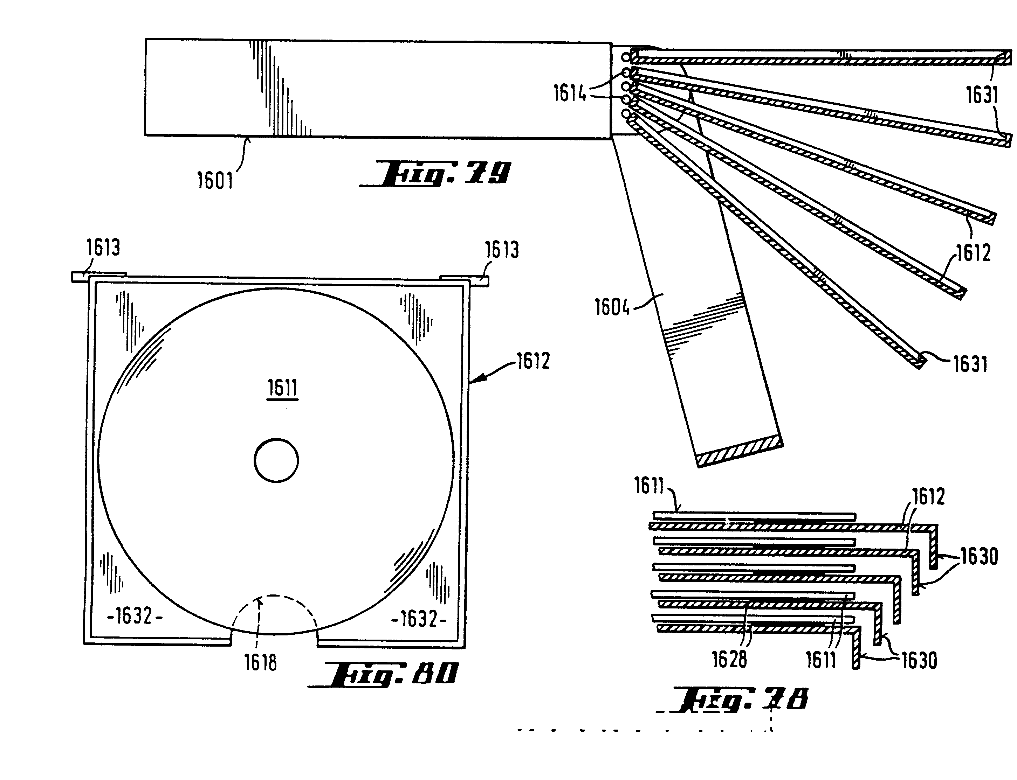

Die Compactdiscs 1611 liegen einzeln in Plattenteilen 1612, die mittels Zapfen 1613 an den Schieber angelenkt sind und so um Achsen 1614 schwenken können. Eine alternative Gelenkverbindung zwischen den Plattenteilen 1612 und dem Schieber 1602 ist in Fig. 76 in Draufsicht, in Fig. 77 in Ansicht dargestellt: Die Endkante des Plattenteils weist einfach angespritzte Schnappkrallen 1623 auf, die beim Aufsetzen auf an den Schieber angespritzte Zapfen 1622 aufspreizen und danach ein Gelenk bilden. - Während Fig. 71 eine erste Ausführungsform eines solchen Plattenteils erkennen läßt, zeigt Fig. 75 eine Variante, die sich von jener durch einen versteifenden Umfangsrand 1617 unterscheidet, der nur an der vorderen Entnahmeseite des Plattenteils weggelassen ist.

Die Plattenteile weisen an der Entnahmeseite einen Griffausschnitt 1618 auf und in ihrem Zentrum einen Vorsprung 1619,
welcher verhindert, daß bei abruptem Öffnen, wenn man also
nach Druck auf die Taste 1608 losläßt und die Federn 1607 voll
wirken läßt, die so beschleunigten Compactdiscs 1611 ausgeworfen werden. Die Einstecktiefe der discs wird begrenzt durch eine
Anschlagleiste 1620.

Fig. 74 zeigt in schematisierter Seitenansicht den geöffneten Behälter. Die Plattenteile werden dabei aufgefächert,
und zwar durch Zusammenwirken des schwenkenden Tors 1604 mit
den Plattenteilen. Das Tor trägt nämlich nach innen ragende
Zapfen 1624, die von unten an Lappen 1626 der Plattenteile 1612
stoßen und sie anheben. Die Lappen sind lang genug, daß die
Zapfen 1624 trotz des Entlanggleitens an diesen wegen der unterschiedlichen Achsabstände stets im Eingriff mit ihnen bleiben.
Beim Zurückschwenken des Tores wirken von oben ebenfalls an das
Tor angeformte weitere Zapfen 1625 auf die Lappen und bringen sie
in die Parallellage zurück, falls die Schwerkraft nicht ausreicht
oder der Behälter nicht in der gezeichneten Position benutzt wird;
das Tor könnte dann mit seiner Frontplatte 1627 an dem ihm nächstliegenden Plattenteil anstoßen, oder die Plattenteile könnten
untereinander kollidieren. Alternativ könnte die Rückstellung
der Plattenteile in ihre Parallellage auch durch Vorspannfedern
oder andere Mittel bewirkt werden. - Das unterste Plattenteil
bleibt ohnehin in seiner Ausgangslage, abgestützt auf die Anschläge 1629.

Anstelle des Sicherungsnockens 1619 könnte man auch auf
den Plattenteilen Haftbeläge anbringen, wie bei 1628 in Fig. 78
angedeutet. Die dort gezeichneten Plattenteile weichen auch
sonst von denen der zuvor beschriebenen Ausführungsform ab;
ihre entnahmeseitige Front ist mit abgewinkelten Beschriftungs-
oder Etikettenflächen 1630 versehen, die einander in der Aufbewahrungsposition überdecken (Fig. 78), jedoch im aufgefächerten
Entnahmezustand gut lesbar sind, wie man leicht erkennt.

Die Variante nach Fig. 79 stellt eine Ausführungsform dar, bei der die Plattenteile nicht nach oben, sondern nach unten auffächern (immer unter der Voraussetzung, daß die zeichnerisch dargestellte Lage auch die Gebrauchslage ist). Damit die discs nicht herunterfallen, ist ein Anschlagrand 1631 vorgesehen. Diese Ausführungsform hat den Vorteil, daß die Einsicht in den Fächer günstiger sein kann als bei der zuvor geschilderten Ausführungsform, insbesondere auf die Randpartien 1632 der Plattenteile (Fig. 80), die hier als Beschriftungs- oder Etikettenfelder gedacht sind.

Abgesehen von den Bauteilen, die ständig elastisch vorgespannt sind, wie die Federn 1607, sind alle Bauteile vorzugsweise als Kunststoffspritzteile ausgebildet. Wie an sich bekannt, können die Außenseiten der Gehäuse 1601 mit Ansätzen und Ausnehmungen komplementärer Profilgestaltung versehen sein, damit gleichartige Behälter formschlüssig zu größeren Einheiten verbunden werden können.

- 1 -

Patentansprüche

1) Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, **dadurch gekennzeichnet**, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß für die manuelle
Freigabe ein im wesentlichen parallel zu der Hauptebene der Frontplatte
verlagerbarer Riegel vorgesehen ist.

2) Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, **dadurch gekennzeichnet**, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß für die manuelle
Freigabe eine in der Frontplatte angeordnete, manuell betätigbare Freigabetaste vorgesehen ist.

3)　　Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan, eine Federanordnung zum Fördern des Transportorgans in eine für die Entnahme des Aufbewahrungsgutes bestimmte Entnahmeposition nach manueller Freigabe, und eine Frontplatte, die bei im Gehäuse befindlichem Transportorgan die Gehäuseöffnung verschließt, **dadurch gekennzeichnet,** daß die Frontplatte mit dem Transportorgan beweglich verbunden ist und gegenüber ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß für die manuelle Freigabe ein durch Druck auf die Frontplatte bei im Gehäuse befindlichem Transportorgan entsperrbares Arretiersystem vorgesehen ist.

4)　　Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan, eine Federanordnung zum Fördern des Transportorgans in eine für die Entnahme des Aufbewahrungsgutes bestimmte Entnahmeposition nach manueller Freigabe, und eine Frontplatte, die bei im Gehäuse befindlichem Transportorgan die Gehäuseöffnung verschließt, **dadurch gekennzeichnet,** daß die Frontplatte mit dem Transportorgan beweglich verbunden ist und gegenüber ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß Anschläge zum Begrenzen des Winkels vorgesehen sind.

5)　　Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan, eine Federanordnung zum Fördern des Transportorgans in eine für die Entnahme des Aufbewahrungsgutes bestimmte Entnahmeposition nach manueller Freigabe, und eine Frontplatte, die bei im Gehäuse befindlichem Transportorgan die Gehäuseöffnung verschließt, **dadurch gekennzeichnet,** daß die Frontplatte mit dem Transportorgan beweglich verbunden ist und gegenüber ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß das Transportorgan
einen Abschnitt aufweist, der - bei im Gehäuse befindlichem Transportorgan - einen von der beweglich mit ihm verbundenen Frontplatte nicht
überdeckten Teil der Gehäuseöffnung einnimmt.

6)    Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, **dadurch gekennzeichnet**, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß das Gehäuse und das
Transportorgan zusammenwirkende Führungsschienen für die Führung des
Transportorgans relativ zum Gehäuse aufweisen.

7)    Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, **dadurch gekennzeichnet**, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß das Transportorgan
ein Plattenteil zum Abstützen jeweils eines Aufzeichnungsträgers umfaßt.

- 4 -

8)    Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, dadurch gekennzeichnet, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß die Frontplatte Führungsmittel zum Leiten eines Aufzeichnungsträgers auf das Transportorgan
aufweist.

9)    Behälter zum Aufbewahren von Magnetbandkassetten, Kompaktschallplatten oder anderen Aufzeichnungsträgern, umfassend ein an einer Schmalseite offenes Gehäuse, ein im Gehäuse beweglich geführtes Transportorgan,
eine Federanordnung zum Fördern des Transportorgans in eine für die Entnahme des Aufbewahrungsgutes bestimmte Entnahmeposition nach manueller
Freigabe, und eine Frontplatte, die bei im Gehäuse befindlichem Transportorgan die Gehäuseöffnung verschließt, dadurch gekennzeichnet, daß die
Frontplatte mit dem Transportorgan beweglich verbunden ist und gegenüber
ihrer Position, in der sie die Gehäuseöffnung verschließt, um einen solchen Winkel verlagerbar ist, daß das Aufbewahrungsgut in der Entnahmeposition an seinen Breitseiten erfaßbar ist, und daß Mittel zum zwangsweisen Verlagern der Frontplatte spätestens in der Entnahmeposition des
Transportorgans vorgesehen sind.

# Fig.1

# Fig.2

1/33

0223940

Fig. 3

0223940

**Fig.4**

68

88

74

5

66

80

84

78

76

70

64

40

**Fig:5**

4

88

74

80

78

84

66

68

54

70

72

64

40

4

0223940

4/JJ

**Fig. 6**

**Fig. 7**

**Fig. 9**

**Fig. 8**

**Fig.10**

**Fig.11**

**Fig.12**

Fig.13

0223940

**Fig.15**

**Fig 16**

**Fig.14**

0223940

**Fig. 15a**

76   234   238   244   232   204   236

**Fig. 15b**

236   76   234

**Fig. 18**

202   248   246   208   17   232'   234,236   212   204

**Fig. 17**

202   248   246   208   18   208   246   244   216   222   220   212   214   204   234,236

**Fig. 17a**

**Fig. 18a**

0223940

0223940

**Fig. 19**

**Fig. 20**

Fig.21

Fig.22

Fig.22a

Fig.23

**Fig. 24**

**Fig. 24a**

900
920
912
910
942
902
922
912
904
920
912
910
902
942
920
912
922

*Fig. 25*

400

404,402

40

406 408

402

*Fig. 27*

400'

226

406

404

210

408

*Fig. 26*

**Fig. 29**

**Fig. 28**

## Fig. 30

*Fig. 32*

807    807    807

805

806    806

805

814    812    814

*Fig. 31*

803    803    803    803    803

804    804    804    804    804

800

815

802    802    802    805

*Fig. 33*    ↑ 32

805    809    810    805

Fig.34

804

813
812
805
811
815
811
834
828
819
814

811
805
811

0223940

## Fig. 35

**Fig. 36**

**Fig.37**

**Fig.39**

**Fig.38**

Fig.42

Fig.43

Fig.40

Fig.41

21/33

0223940

Fig.45

Fig.44

**Fig. 46**

-1034-

1036

1022

1016

-1014-

-1024-

1020

1018

1032

-1012-

-1010-

1028

1030

1030

**Fig. 47**

1014' 1040

1022

1042

1028

-1010-

**Fig. 48**

1026

**Fig. 49**

1026

**Fig. 50**

**Fig. 51**

**Fig:52**

1210

1212

1216

1222
1220
1218

**Fig:53**

1222
1218
1216
1214
1212

**Fig:54**

1212
1216
1214

25/33

0223940

**Fig.55**

**Fig.58**

**Fig.59**

**Fig.60**

1316  1336  1334  1318  1324  1318  1344  1322  1322

1314  1310  1312  1344  1324  1344  1316  1340

Fig.56

Fig.57

**1400**

**1406**

**1402**

**1410**

**1405**

**1405**

**1404**

**Fig: 61**

**1406**

**1412**

**1410**

**Fig: 62**

**1405**   **1406**   **1408**

**1400**

**Fig: 63**

0223940

1520

1518     1514     1512

1518

1510

*Fig. 64*

1520

1518       1516      1518     1510

*Fig. 65*

*Fig. 66*

0223940

Fig. 67

Fig. 68

Fig. 69

Fig. 70

0223940

Fig.72

Fig.71

Fig.73

**Fig. 75**

**Fig. 76**

**Fig. 77**

**Fig. 74**

**Fig. 79**

1601

1614

1604

1631

1612

1631

**Fig. 80**

1613      1613

1611

1612

-1632-      -1632-

1618

1611

1612

1630

1628      1611      1630

**Fig. 78**

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE-A-2 729 492 (FA. THEYSOHN) * Ansprüche 1, 3-8; Figuren 1-3 * | 1-9 | G 11 B 23/023 |
| A | DE-A-3 015 748 (IDN) * Seite 4, Zeile 10 - Seite 5, Zeile 7; Figuren 1-4 * | 1-9 | |
| A | FR-A-2 297 478 (LE CARTON LUXE ET BORDERS) * Seite 3, Zeile 18 - Seite 4, Zeile 6; Figuren 1-3 * | 1-9 | |
| A | DE-A-2 734 788 (MINNESOTA MINING CO.) * Ansprüche 1-5; Figuren 1-5 * | 1-9 | |
| D,A | DE-C-2 248 408 (IDN) | | RECHERCHIERTE SACHGEBIETE (Int. Cl 4) G 11 B 23/00 G 11 B 33/04 |

Der vorliegende Recherchenbericht wurde für alle Patentansprüche erstellt.

| Recherchenort | Abschlußdatum der Recherche | Prüfer |
|---|---|---|
| BERLIN | 05-02-1987 | ROGNONI M.G.L. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82